(19) Europäisches Patentamt
European Patent Office
Office européen des brevets

(11) **EP 4 718 818 A1**

(12) **EUROPEAN PATENT APPLICATION**

(43) Date of publication:
**01.04.2026 Bulletin 2026/14**

(21) Application number: **24306591.9**

(22) Date of filing: **30.09.2024**

(51) International Patent Classification (IPC):
***H04L 65/613*** *(2022.01)* ***H04L 65/756*** *(2022.01)*
***H04L 65/75*** *(2022.01)* ***H04L 65/80*** *(2022.01)*
***H04N 21/2343*** *(2011.01)* ***H04N 21/262*** *(2011.01)*
***H04N 21/845*** *(2011.01)*

(52) Cooperative Patent Classification (CPC):
**H04L 65/613; H04L 65/65; H04L 65/756; H04L 65/762; H04L 65/80; H04N 21/23439; H04N 21/26258; H04N 21/8456;** H04L 65/752

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **AUMONT, Franck**
**35770 VERN SUR SEICHE (FR)**
- **HOUSSAINY, Hadi**
**35700 RENNES (FR)**
- **LE MEUR, Olivier**
**35160 TALENSAC (FR)**
- **REINHARD, Erik**
**35630 HEDE-BAZOUGES (FR)**
- **DEMARTY, Claire-Helene**
**35520 MONTREUIL LE GAST (FR)**

(74) Representative: **Vossius & Partner**
**Patentanwälte Rechtsanwälte mbB**
**Siebertstraße 3**
**81675 München (DE)**

# (54) CMCD CLIENT ENERGY RELATIVE INFORMATION SIGNALING FOR ADAPTIVE STREAMING SERVICES

(57) Some embodiments of a method may include: obtaining a description of services provided by a Content Delivery Network (CDN) according to a Media Presentation Description (MPD) file; obtaining a selection of a first service selected from the description of services provided by the CDN; connecting to a session for the first service; obtaining a plurality of content segments corresponding to a first representation for the first service; providing, to an application for playback, one or more of the plurality of content segments corresponding to the first representation; providing, to the CDN, a report of client energy-related information; obtaining an updated description of services provided by the CDN according to an updated MPD file, wherein the updated description of services provided by the CDN was updated based on the report of client energy-related information; and switching to a second representation for the first service.

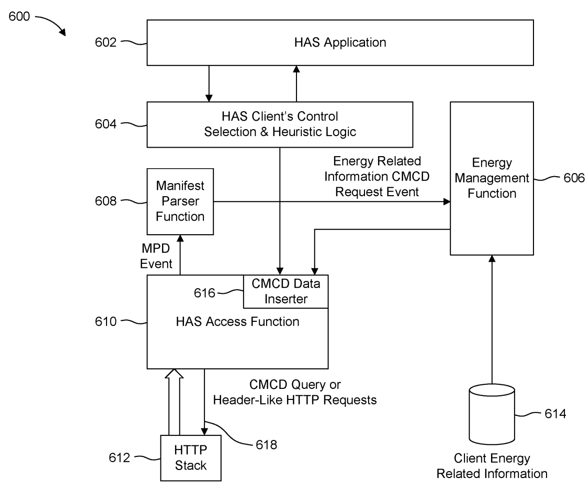


FIG. 6

EP 4 718 818 A1

## Description

### INCORPORATION BY REFERENCE

The present application incorporates by reference in its entirety the following application: International Patent Application Serial No. PCT/EP2024/069985, entitled "ISOBMFF CARRIAGE OF ATTENUATION MAP INFORMATION FOR ENERGY-AWARE IMAGES IN A DASH CONTEXT" and filed July 15, 2024 ("'985 application"); European Patent Application Serial No. EP23306784, entitled "ISOBMFF CARRIAGE OF ATTENUATION MAP INFORMATION FOR ENERGY-AWARE IMAGES IN A DASH CONTEXT" and filed October 13, 2023 ("'784 application"); European Patent Application Serial No. EP23306227, entitled "ISOBMFF CARRIAGE OF ATTENUATION MAP INFORMATION FOR ENERGY-AWARE IMAGES IN A DASH CONTEXT" and filed July 17, 2023 ("'227 application").

### BACKGROUND

The present application is related to the field of communications systems for video streaming.

### SUMMARY

An example method in accordance with some embodiments may include: obtaining a description of services provided by a Content Delivery Network (CDN) according to a Media Presentation Description (MPD) file; obtaining a selection of a first service selected from the description of services provided by the CDN; connecting to a session for the first service; obtaining a plurality of content segments corresponding to a first representation for the first service; providing, to an application for playback, one or more of the plurality of content segments corresponding to the first representation; providing, to the CDN, a report of client energy-related information; obtaining an updated description of services provided by the CDN according to an updated MPD file, wherein the updated description of services provided by the CDN was updated based on the report of client energy-related information; and switching to a second representation for the first service.

Some embodiments of the example method may further include: obtaining a plurality of content segments corresponding to the second representation for the first service; and providing, to an application for playback, one or more of the plurality of content segments corresponding to the second representation.

Some embodiments of the example method may further include communicating client device information to a server corresponding to a service provider.

For some embodiments of the example method, providing, to the CDN, the report of client energy-related information comprises providing the report of client energy-related information as part of an MPD service description request.

For some embodiments of the example method, providing, to the CDN, the report of client energy-related information comprises providing the report of client energy-related information as part of a content segment request.

For some embodiments of the example method, providing, to the CDN, the report of client energy-related information comprises providing the report of client energy-related information as part of an initialization segment request.

For some embodiments of the example method, switching to the second representation for the first service is based on the updated description of services provided by the CDN.

For some embodiments of the example method, switching to the second representation for the first service is based on criterion regarding energy conservation, bandwidth of a corresponding communication portal, or quality corresponding to one or more of the plurality of content segments.

For some embodiments of the example method, switching to the second representation for the first service is based on an energy-aware bitrate ladder.

For some embodiments of the example method, switching to the second representation for the first service comprises selecting the second representation from a list of representations corresponding to an energy-aware bitrate ladder.

For some embodiments of the example method, the report of client energy-related information comprises at least one of energy measurement start date, energy measurement duration, aggregate energy, aggregate power, and carbon intensity.

Some embodiments of the example method may further include: receiving, from the CDN, a query for particular client energy-related information; and providing, to the CDN, a response report of client energy-related information based on the query for particular client energy-related information.

Some embodiments of the example method may further include: receiving, from the CDN, a query for an energy index corresponding to a hardware configuration of a client device; and providing, to the CDN, the energy index corresponding to the hardware configuration of the client device.

For some embodiments of the example method, the method is performed by a device supporting at least one of a Dynamic Adaptive Streaming Over HTTP (DASH)-based protocol, an HTTP Adaptive Streaming (HAS)-based protocol, a Hypertext Transfer Protocol (HTTP)-based protocol, and a Common-Media-Client-Data (CMCD) protocol.

An example apparatus in accordance with some embodiments may include: a processor; and a memory storing instructions operative, when executed by the processor, to cause the apparatus to perform any one of the methods listed above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1A is a system diagram illustrating an example communications system according to some embodiments.

FIG. 1B is a system diagram illustrating an example set of interfaces for a system according to some embodiments.

FIG. 2 is a system diagram illustrating an example set of interfaces for an example DASH system according to some embodiments.

FIG. 3 is a block diagram showing an example MPD XML manifest file structure according to some embodiments.

FIG. 4 is a system diagram illustrating an example energy-aware HAS server architecture according to some embodiments.

FIG. 5 is a system diagram illustrating an example energy-aware HAS server architecture with end-user device energy-related information according to some embodiments.

FIG. 6 is a system diagram illustrating an example energy-aware HAS client architecture with end-user device energy-related information according to some embodiments.

FIG. 7 is a process diagram illustrating example CMCD energy-related information events according to some embodiments.

FIGs. 8A-8B together form a message sequencing diagram illustrating example CMCD client energy-related information in an HTTP request of the MPD by the client according to some embodiments.

FIGs. 9A-9B together form a message sequencing diagram illustrating example CMCD client energy-related information in each HTTP request by the client according to some embodiments.

FIGs. 10A-10B together form a message sequencing diagram illustrating example CMCD client energy-related information in an initialization segment HTTP request by the client according to some embodiments.

FIGs. 11A-11B together form a message sequencing diagram illustrating example CMCD client energy-related information in HTTP requests by the client when switching representations according to some embodiments.

FIG. 12 is a flowchart illustrating an example process for reporting client energy-related information according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104/113 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106 may be in direct or indirect communication with other RANs that employ the same RAT as the RAN 104/113 or a different RAT. For example, in addition to being connected to the RAN 104/113, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

FIG. 1B is a system diagram illustrating an example set of interfaces for a system according to some embodiments. An extended reality display device, together with its control electronics, may be implemented using a system such as the system of FIG. 1B. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

This application relates to the global video chain (production, encoding, transmission, decoding, rendering) over fixed or mobile network in an adaptative streaming context (e.g., over HTTP). The application relates to the field of communications systems for video streaming, aimed at providing signaling mechanisms to enable a device to control the energy usage and the rendered video quality in an adaptative streaming context (e.g., MPEG-DASH, which is specified in *Information Technology - Dynamic Adaptive Streaming Over HTTP (DASH) - Part 1: Media Presentation Description and Segment Formats,* ISO/IEC 23009-1 :2022, ISO/IEC ("*ISO/IEC 23009-1*") on a desktop or laptop computer, a smartphone, a tablet, a set-top box, or a television connected to the internet.

Reducing the carbon footprint and energy consumption of electronic devices has become a requirement for electronic devices manufacturers with desires to limit, as much as possible, the environmental impact and to contribute to the emergence of sustainable video streaming.

Several factors have brought about an increase in energy requirements of devices. These factors include an increase of video streaming services with multiple resolutions, including SD, HD, 4K, and/or 8K and beyond; an increase in the number of delivery functions (pre-processing, upscaling, downscaling, encoding, transcoding, distribution, decoding, rendering, among other processes); an increase in the number of codecs; an increase in the number of end user device profiles; and an increase in the number of video format(high dynamic range versus standard dynamic range). This increase in energy requirements is inconsistent with a global desire to reduce energy consumption. Furthermore, there is a desire to reduce the energy consumption of playback devices while maintaining a high Quality of Experience (QoE).

HTTP adaptive streaming (HAS) is being increasingly adopted by over-the-top (OTT)-based video streaming services because HAS allows clients to dynamically switch among various stream representations of a bit rate/resolution ladder. The client selects a representation considering its downlink bandwidth condition(s) and its resolution to preserve its quality of experience. The bitrate ladder may be generated using several approaches: (1) a static approach which considers a set of bitrate/resolution pairs for all the videos; (2) intensive encoding of all resolutions over a wide bitrate range to construct the convex-hull; (3) machine learning content-based prediction without performing an exhaustive search.

As understood, any of these approaches considers the energy consumption and the carbon footprint. However, they are used for video service streaming which represents nearly 80% of the ICT traffic. A question raised is how to reduce the energy consumption required to transmit an asset (e.g., a video asset) of a video service, from the post-production up to the renderer of the end user device with these approaches, globally or per streaming chain function to adapt the end user device strategy when the end user device selects a representation. The present application aims to improve the dynamic adaptive streaming over HTTP signaling to enable the server to compute the energy consumption and the carbon footprint of the streaming chain functions executed on the end user device (e.g., accessing, downscaling, upscaling, decoding, post-processing, and rendering functions) and to adapt the bitrate ladder accordingly.

The present application aims to improve any energy-aware bitrate ladder at the server side by offering the client the capability to signal its characteristics and to allow the server to: estimate more accurately the energy consumption of the client functions while watching a video service (e.g., accessing, decoding, post-processing (downscale/upscale, tone mapping, display adaptation, among others) and rendering functions; perform better pruning to select the representations of the energy-aware bitrate ladder; and estimate the carbon intensity as a weighted average of the emissions from the different energy sources to generate the electricity needed for executing the streaming functions on the device while playing a video service

The DASH dynamic adaptative streaming paradigm is used as an example here, but this approach may be generalized to any other configurations (e.g., HTTP Live Streaming (HLS)). A generalization for other streaming systems not based on HTTP (e.g., Real-time Transfer Protocol (RTP)) may be done using a JSON-type string to concatenate client energy-related information because, in that case, they may be carried outside an HTTP query or header.

FIG. 2 is a system diagram illustrating an example set of interfaces for an example DASH system according to some embodiments. As illustrated in FIG. 2, the Dynamic Adaptative Streaming over HTTP (DASH) protocol (*ISO/IEC 23009-1*), which also may be referred to as HAS, enables delivery of continuous media content from standard HTTP servers to HTTP clients and enables caching of content by standard HTTP caches. DASH / HAS allows the highest visual quality while influenced by various factors, such as, network bandwidth, display resolution, and viewing conditions.

A DASH system 200 may include a process for DASH media presentation preparation 202. Such a process 202 may interact with a Media Presentation Description (MPD) delivery function 204 and a DASH segment delivery function (HTTP server) 206. An HTTP cache 208 may be used for communicating segments between the DASH segment delivery function (HTTP server) 206 and a DASH client 210. Also, the HTTP cache 208 may be used for communicating the MPD between the MPD delivery function 204 the DASH client 210.

FIG. 3 is a block diagram showing an example MPD XML manifest file structure according to some embodiments. HTTP adaptive streaming (HAS) is being increasingly adopted by over-the-top (OTT)-based video streaming services because HAS allows clients to dynamically switch among various stream representations (which may be signaled in an MPD manifest file) of a bit rate/resolution ladder and to reach the best quality of experience (QoE). See FIG. 3 for an example of a bit rate/resolution ladder signaled in an MPD manifest file 300.

Within an MPD manifest file 300 is a media presentation description (MPD) container 302. The MPD container 302 may include multiple period IDs 312, 314, 316. Within example period ID 2 (304) are adaptation sets 0 (318), 1 (320), and 2 (322). Within example adaptation set 1 (306) are representations 1 (324), 2 (326), and 3 (328). Within example representation 2 (308) is a segment information block 330. Within an example segment information block 310 are an initialization segment 332 and four media segments 334, 336, 338, 340.

Each of these representations is encoded to target a specific bitrate providing a wide range of operating bitrates known as the bitrate ladder. Several approaches with different levels of complexity are currently used to build such a bitrate ladder, such as: (1) fixed bitrate ladder which is a set of bitrate resolution pairs, called "one-size-fits-all"; (2) complex bitrate ladder based on the intensive encoding of all resolutions over a wide bitrate range to construct a convex-hull; and (3) machine learning content-based ladder which is based on optimization of the bitrate range by analyzing the content and determining the best quality versus the bitrate. These bitrate ladders permit offering of the best end-user QoE (e.g., higher BD-BR, video stall limitation) and an optimization of the network bandwidth usage (e.g., bitrate budget reduction for a service), but they do not take into account sustainability and overall energy consumption of the video streaming chain.

**Problem to be Solved**

As understood, the CMCD (Common-Media-Client-Data) standardized protocol currently allows clients to communicate some data to Content Delivery Networks (CDNs) while using (consuming) a video service. The transmission of this detailed data and information may facilitate better troubleshooting, optimization, and dynamic delivery adjustments by CDNs. However, such data does not carry energy-related information.

Some embodiments use a method to reduce the energy consumption of an adaptative streaming service by generating an energy-aware bitrate ladder. This method uses some information (e.g., the underlying hardware and the platform infrastructure) from the end-user device to be able to use energy models to estimate/compute the energy consumption level of each function of the end-user device when consuming the assets of the service.

Thus, the problem to be solved is the ability to offer the end-user device the capability to signal the information to the server used to estimate accurately the energy consumption of the functions executed on this device while receiving a video service and to carry them over HTTP.

FIG. 4 is a system diagram illustrating an example energy-aware HAS server architecture according to some embodiments. An energy-aware bitrate ladder construction enables entities on the server side to estimate the energy consumption of the overall adaptative streaming chain (e.g., from the content provider up to the end-user device) when the end-user device is connected to a media service and is playing at least one media asset representation (e.g., video asset) of this service.

FIG. 4 shows an example energy-aware HAS server architecture 400. A service provider 402 provides resolutions 404 to a convex null construction function 420 and to a downscale/upscale function 430. The service provider 402 provides bitrates 406 to the convex null construction function 420. The service provider 402 provides weights 408, codecs 410, and quality metrics 412 to the convex null construction function 420 and to an energy prediction function 426. The service provider 402 provides an energy reduction rate 414 and a quality resolution rate 416 to the energy prediction function 426 and to the energy-aware bitrate ladder constructor function 418.

Original video content 428 is provided to the content feature extraction function 432 and the downscale/upscale function 430. The content feature extraction function 432 provides content features $F_c$ to the convex null construction function 420, which in turn are provided to the energy prediction function 426. The convex null construction function 420 provides parameters such as bitrates (e.g., $B_i$), resolutions (e.g., $R_j$), and quality metrics (e.g., $Q_k$) to the energy-aware bitrate ladder constructor function 418.

The energy prediction function 426 has access to a quality IA regression model 422 and an energy IA regression model 424. The energy prediction function 426 communicates the quality IA regression model 422 to the energy-aware bitrate ladder constructor function 418. The energy prediction function 426 communicates alternate versions of the bitrates (e.g., $B_i'$), the resolutions (e.g., $R_j'$), and the quality metrics (e.g., *Qk)* as well as codecs ($C_m$) and energy predictions ($E_k$) and to the energy-aware bitrate ladder constructor function 418. The energy-aware bitrate ladder constructor function 418 takes these parameters (including the energy reduction rate 414 and the quality reduction rate 416 mentioned earlier) and generates an energy-aware bitrate ladder. The energy-aware bitrate ladder constructor function 418 communicates to an encoder function 434 energy-aware bitrates (e.g., $EAB_i$), energy-aware resolutions (e.g., $EAR_j$), and energy-aware codecs (e.g., $EAC_m$).

The downscale/upscale function 430 generates downscaled and upscaled versions of the original video content. These downscaled and upscaled versions of the original video content are communicated to the encoder function 434. The encoder function 434 uses encoding configuration information as well as the energy-aware bitrates (e.g., $EAB_i$), energy-aware resolutions (e.g., $EAR_j$), and energy-aware codecs (e.g., $EAC_m$) to generate encoded versions of the video content corresponding to the energy-aware bitrate ladder.

The encoder function 434 communicates the encoded versions of the video content to a DASH packager/delivery function 436. The DASH packager/delivery function 436 communicates service-related events to the service provider 402. The DASH packager/delivery function 436 communicates MPD media segments to the HTTP stack 438.

On the server side, the energy consumption estimate, the resolution, the bit rate, and the quality are used to generate an energy-aware bitrate ladder, which is signaled in the media presentation descriptor (MPD) manifest file published on the CDN as requested by the end-user device. Some embodiments do not account for the characteristics or the profile of the client device, which could improve the model used to estimate the energy of the client functions.

FIG. 5 is a system diagram illustrating an example energy-aware HAS server architecture with end-user device energy-related information according to some embodiments. FIG. 5 shows an example energy-aware HAS server architecture 500. A service provider 502 provides resolutions 504 to a convex null construction function 520 and to a downscale/upscale function 530. The service provider 502 provides bitrates 506 to the convex null construction function 520. The service provider 502 provides weights 508, codecs 510, and quality metrics 512 to the convex null construction function 520 and to an energy prediction function 526. The service provider 502 provides an energy reduction rate 514 and a quality resolution rate 516 to the energy prediction function 526 and to the energy-aware bitrate ladder constructor function 518.

Original video content 528 is provided to the content feature extraction function 532 and the downscale/upscale function 530. The content feature extraction function 532 provides content features $F_c$ to the convex null construction function 520, which in turn are provided to the energy prediction function 526. The convex null construction function 520 provides parameters such as bitrates (e.g., $B_i$), resolutions (e.g., $R_j$), and quality metrics (e.g., $Q_k$) to the energy-aware bitrate ladder constructor function 518.

The energy prediction function 526 has access to a quality IA regression model 522 and an energy IA regression model 524. The energy prediction function 526 communicates the quality IA regression model 522 to the energy-aware bitrate ladder constructor function 518. The energy prediction function 526 communicates alternate versions of the bitrates (e.g., $B_i'$), the resolutions (e.g., $R_j'$), and the quality metrics (e.g., *Qk)* as well as codecs ($C_m$) and energy predictions ($E_k$) and to the energy-aware bitrate ladder constructor function 518. The energy-aware bitrate ladder constructor function 518 takes these parameters (including the energy reduction rate 514 and the quality reduction rate 516 mentioned earlier) and generates an energy-aware bitrate ladder. The energy-aware bitrate ladder constructor function 518 communicates to an encoder function 534 energy-aware bitrates (e.g., $EAB_i$), energy-aware resolutions (e.g., $EAR_j$), and energy-aware codecs (e.g., $EAC_m$).

The downscale/upscale function 530 generates downscaled and upscaled versions of the original video content. These downscaled and upscaled versions of the original video content are communicated to the encoder function 534. The encoder function 534 uses encoding configuration information as well as the energy-aware bitrates (e.g., $EAB_i$), energy-aware resolutions (e.g., $EAR_j$), and energy-aware codecs (e.g., $EAC_m$) to generate encoded versions of the video content corresponding to the energy-aware bitrate ladder.

The encoder function 534 communicates the encoded versions of the video content to a DASH packager/delivery function 536. The DASH packager/delivery function 536 communicates service-related events to the service provider 502. The DASH packager/delivery function 536 communicates MPD media segments to the HTTP stack 538.

There are a few differences between FIGs. 4 and 5. For some embodiments, the service provider 502 communicates device information 540 to the energy prediction function 526. The energy prediction function 526 may use the device information 540 in addition to the bitrates (e.g., $B_i$), resolutions (e.g., $R_j$), quality metrics (e.g., $Q_k$), the energy reduction rate 514, and the quality reduction rate 516 to generate the energy predictions ($E_k$). For some embodiments, end-user device energy-related information 544 is communicated bi-directionally between the DASH packager/delivery function 536 and the HTTP stack 538. For some embodiments, end-user device energy-related information events 542 (in addition to service-related events) are communicated from the DASH packager/delivery function 536 to the service provider 502.

FIG. 6 is a system diagram illustrating an example energy-aware HAS client architecture with end-user device energy-related information according to some embodiments. FIG. 6 shows an example energy-aware HAS client architecture 600. An HTTP stack 612 communicates HTTP messages to an HTTP adaptive streaming (HAS) access function 610. MPD events that are received are communicated by the HAS access function 610 to the manifest parser function 608. The manifest parser function 608 parses any MPD events and sends an energy-related information CMCD request event to an energy management function 606. The energy management function 606 retrieves client energy-related information 614 from memory, and the energy management function 606 sends the client energy-related information 614 to a CMCD data inserter process 616. A HAS application 602 receives heuristic logic data and transmits a HAS client's control selection to the CMCD data inserter process 616. For some embodiments, a control process 604 is used to handle and communicate heuristic logic and a HAS client's control selection between the HAS application 602 and the CMCD data inserter process 616. The CMCD data inserter process 616 generates a CMCD query or header-like HTTP request 618. The HAS access function 610 sends the CMCD query or header-like HTTP request to the HTTP stack 612. The CMCD query or header-like HTTP request 618 may include the client energy-related information 614 that was retrieved from memory.

## Summary

The content of this application enables a client to communicate some energy related information, depending on the client characteristics or profile, to a CDN and an origin server by using the Common-Media-Client-Data (CMCD) standardized protocol.

The energy related information allows the server to estimate accurately the energy consumption of the functions (such as decoding, rendering, and post-processing, among others) executed on the client when connected to a video service. The estimation of the energy may be performed using some IA models.

## New Energy-Related Information Released by the Client

Energy-related information may indicate the underlying hardware/platform infrastructure configuration of the client. Such information may be used to increase accuracy in estimating the energy consumption of the client functions. They also allow estimation of carbon intensity of electricity as a weighted average of the emissions from the different energy sources (e.g., coal, petroleum, geothermal, and solar, among others) that are used to generate electricity on the client side.

Table 1 gives some examples of parameters that a client may transmit to a server for improving estimation of the energy on the server side. Table 1 shows energy-related information for several example client devices.

**Table 1.**

| Parameter Name | Description |
|---|---|
| CPU Model | This parameter indicates the CPU processor of the device (e.g., Intel Core i9...). |
| CPU Clock | This parameter refers to the frequency at which a CPU may execute instructions and carry out tasks. |
| CPU RAM Size | This parameter indicates the size of the CPU RAM memory of the device available for the HAS sessions. |
| GPU Model | This parameter is the GPU model(s) available on the device hardware (e.g., 4V100, Adreno 750...). |
| GPU Clock | This parameter indicates the number of processing cycles one GPU may perform per second. |
| GPU RAM Size | This parameter indicates the size of the GPU memory of the device available for the HAS sessions. |
| Highest Video Resolution | This parameter is the highest video resolution supported by the device (e.g., 4k TV). |
| Resolution List | This parameter is the list of video resolutions supported by the player at the client side. |
| Energy Source List | This parameter is the list of the (Energy sources + weights) used to generate the electricity on the device: (petroleum,10%) + (solar,20%) + (nuclear,70%) |
| Display Model | This parameter indicates the display model type of the client if the client has the capability to render video on a screen. The values are:<br>1: Transmissive pixel<br>2: Emissive pixel<br>4 and 8: Used for future types of display |
| ... | Additional parameters for future |

### CMCD Energy-Related Information Events

FIG. 7 is a process diagram illustrating example CMCD energy-related information events according to some embodiments. FIG. 7 shows a network 700 example CMCD energy-related information events. For example, smart phones 716, 718 may communicate to a cell tower 710 CMCD energy-related log events. Furthermore, a laptop device 720 may communicate to a Wi-Fi device 712 CMCD energy-related log events. Additionally, a TV device 722 may communicate to a Wi-Fi device 714 CMCD energy-related log events. The CMCD energy-related logs may be communicated to a CDN, such as CDN1 (704), CDN2 (706), or CDN3 (708), The CDNs 704, 706, 708 may communicate the energy-related information analytics to an origin server 702.

The Common-Media-Client-Data (CMCD) specification defines the means to allow the clients to transmit some data logs to the CDN (see FIG. 7) and the video service provider to help increase the overall performance. The data is sent by the client to the CDN as a custom header (e.g., header transition mode) or a custom query (e.g., query transition mode) parameter alongside each manifest or segment request.

For header transition mode, the specification *Web Application Video Ecosystem - Common Media Client Data* ("CTA-5004") defines the following custom headers: CMCD-Request, CMCD-Object, CMCD-Status, and CMCD-Session, which are used to carry the data payload. The payload is a series of key/value pairs that provide the information that the client wants to report to the CDN/service provider. Code Listing 1 shows these example CMCD headers used in HTTP requests of segments. See Tables 2 and 3 for more information regarding messages with these types of headers.

```
cmcd-request: bl=57300,dl=57300,mtp=21300,nrr="23907012-26061617"

cmcd-object:  br=3573,d=6000,ot=v,tb=3573

cmcd-status:  rtp=1900

cmcd-session: sf=d,sid="5f4a653a-d72d-4fe8-8a7b-3dfb6d63b3f1",st=v
```

**Code Listing 1.**

For query transition mode, the CTA 5004 specification defines how a custom query is created. For example, the following CMCD-type encoded string may be added to a segment query: "CMCD=<URL encoded concatenation of key_value_pairs><reserved character>".

Code Listing 2 shows an example of CMCD headers in an HTTP request of a segment. In the example text shown in Code Listing 2, carriage returns are inserted to allow the full text to be seen in a printed version of this application.

In the example shown in Code Listing 2, the text string "https://dash.akamaized.net/akamai/bbb_30fps/bbb_30fps_3840x2160_12000k/bbb_30fps_3840x2160_12 000k_21.m4v?" is the original query to get an asset segment. The text string "CMCD" is the CMCD sting. The text string "bl%3D59500" is an example one pair key/value.

**Code Listing 2.**

```
https://dash.akamaized.net/akamai/bbb30fps/
    bbb_30fps_3840×2160_12000k/bbb_30fps_3840×2160_12000k_21,m4v?
    CMCD=bl%3D59500%2Cbr%3D14931%2Cd%3D4000%2Cdl%3D59500%2Cmtp
    %3D250100%2Cnor%3D%22bbb 30fps 3840x2160 12000k 22.m4v%22%2Cot
    %3Dv%2Crtp%3D5100%2Csf%3Dd%2Csid%3D%229920e303-d02a-47cb-b9a1-
    30c7f3f0436f%22%2Cst%3Dv%2Ctb%3D14932
```

The application defines new keys for the client energy-related information, with one new key per block of information as shown in Table 2.. Table 2 shows definitions of CMCD keys for client energy-related information.

In Table 2, the keys are defined as independent keys. When the client creates the CMCD-Header, CMCD-Query, or JSON-Format CMCD-object, some keys may be grouped together for consistency. For example, Energy Measurement Start Date, Energy Measurement Duration, Aggregate Energy, and Carbon Intensity may be grouped together.

**Table 2. Client Energy-Related Information CMCD Key Definition**

| Description | Key Name | Header Name | Type and Unit | Value Definition |
|---|---|---|---|---|
| Energy Index | ei | CMCD-Session | Integer | The parameter indicates an energy index to allow the server provider to retrieve the hardware / platform infrastructure configuration of the client without requiring the client to transmit this information. A table of all possible energy indexes is maintained and known by the service provider and the client device. (e.g., a value of 1 indicates that the client has the following configuration: CPU Model=Core i9, CPU Clock=3.3GHz, ...) |
| CPU Model | cpum | CMCD-Session | String | The model of the CPU which is used at the client side to play the audio or video object of an HAS session. The value does not vary over the life of the session. (e.g., Core i9) |
| CPU Clock | cpuc | CMCD-Session | Integer GHz | The clock speed of the CPU which is used at the client side to play the audio or video object of an HAS session. The value does not vary over the life of the session. (e.g., 3.3 GHz) |
| CPU RAM Size | crs | CMCD-Session | Integer Go | The CPU RAM Size available to play the audio or video object of an HAS session at the client side. The value does not vary over the life of the session. (e.g., 32 GB) |
| GPU Model | gpum | CMCD-Session | String | The model of the GPU which is used at the client side to play the audio or video object of an HAS session. The value does not vary over the life of the session. (e.g., NVIDIA Tesla V100) |
| GPU Clock | gpuc | CMCD-Session | Decimal GHz | The clock speed of the GPU which is used at the client side to play the audio or video object of an HAS session. The value does not vary over the life of the session. (e.g., 1.530 GHz) |
| GPU RAM Size | grs | CMCD-Session | Integer Go | The GPU RAM Size available to play the audio or video object of an HAS session at the client side. The value does not vary over the life of the session. (e.g., 16 GB) |
| Highest Resolution | hr | CMCD-Session | String | The maximal resolution of a video object that the player may render at the client side over the life of the session. (e.g., 1920x1080) |
| Resolution List | rl | CMCD-Session | String | The list of the video object resolutions supported by the player at the client side over the life of the session. (e.g., 720x480; 1280x720; 1920x1080; 3840x2160) |
| Display Model | dm | CMCD-Session | Integer | The parameter indicates the display model type of the client:<br><br>1: Transmissive pixel<br>2: Emissive pixel<br>4 and 8: Future type of display |
| Energy Measurement Start Date | emsd | CMCD-Session | String | The parameter indicates the start date of the energy information measurement. (e.g., "2024-09-26T16:09:10Z") |
| Energy Measurement Duration | emd | CMCD-Session | Integer second | The parameter indicates the duration over which the energy information has been calculated. |
| Aggregate Energy | ae | CMCD-Session | Decimal watt-second | The parameter indicates the aggregate energy. |
| Aggregate Power | ap | CMCD-Session | Decimal watt | The parameter indicates the aggregate power. |

(continued)

| Description | Key Name | Header Name | Type and Unit | Value Definition |
|---|---|---|---|---|
| Carbon Intensity | ci | CMCD-Session | Decimal g CO_2 e/kWh | The parameter indicates the carbon intensity. |
| Energy Source List | esl | CMCD-Session | String | The concatenation of the electricity supply sources of the client while playing an audio or a video object of an HAS session. For example, the sources may be coal, petroleum, natural gas, geothermal, and/or wind, among others. A percentage is provided if there is a mix of electricity sources.<br>e.g., For 25% coal, 35% petroleum, 26% natural gas and 14% nuclear, the string is:<br>"c:25;p:35;ng:26;n:14" |

For some embodiments, a single key is defined. See Table 3, which shows client energy-related information for a global CMCD key definition. For example, a JSON-type string object may be used to combine (or concatenate) all the information into a single string.

**Table 3.**

| Description | Key Name | Header Name | Type and Unit | Value Definition |
|---|---|---|---|---|
| Client Energy-Related Information | ceri | CMCD-Session | String | The overall client energy related information which is the concatenation of all the values defined in Table 2. As an example, this may be a JSON-type string. |

Code Listing 3 shows a JSON type string example.

```
{
  "CpuModel":   "Core i9",
  "CpuClock":   3.3,
  "CpuRamSize": 32,

...
}
```

Code Listing 3.

**Code Listing 3.**

Code Listing 4 shows a JSON type string example for parameters grouped together. This example shows the CPU model, the CPU clock, and the CPU RAM size "keys" grouped together in the "deviceHWConfiguration" structure element. This example also shows the energy measurement start date, the energy measurement duration, and the carbon intensity "keys" grouped together in the "EnergyMeasuredInformation" structure element.

For some embodiments, a client device may create a report of client energy-related information that includes two or more parameters grouped together. For some embodiments, a client device may receive a request for particular client energy-related information, and the client device may respond with the particular client energy-related information. For some embodiments, the client device may respond with "extra" parameters grouped together with the requested

parameters.

```
{
  “deviceHWConfiguration”: {
    “CpuModel”:   “Core i9”,
    “CpuClock”:   3.3,
    “CpuRamSize”: 32,
    ...
  }
  “EnergyMeasuredInformation”: {
    “EnergyMeasurementStartDate”: “2024-09-26T16:09:10Z",
    “EnergyMeasurementDuration”:  180,
    “CarbonIntensity”:            148, 23,
    ...
  }
}
```

Code Listing 4.

**Sequence Diagrams**

FIGs. 8A to 11B show different cases for a HAS client to transmit its energy-related information to the origin server when a service session is created and, for such a session, the service provider requests such information. For instance, this information may be used by an origin server to adapt dynamically the HAS bitrate ladder to reduce energy and carbon emissions.

**Client Transmits Client Energy-Related Information with HTTP Request of MPD**

FIGs. 8A-8B together form a message sequencing diagram illustrating example CMCD client energy-related information in an HTTP request of the MPD by the client according to some embodiments. FIGs. 8A-8B work together to show the message sequencing scenario 800 in which the client transmits the client energy-related information when the client requests the MPD to create a service list from the service description elements.

In step 1, the origin server 802 announces that service #1 is available by publishing 812 the MPD with the service description element for this service. The service description element indicates that the client energy-related information shall be provided by the client. The MPD and the initialization segment 816 for adaptative streaming are cached in the CDN 806 to be requested by the HAS client 808.

In step 2, the user (through the HAS application 810) requests 814 a list of video services distributed by the service provider. The HAS client 808 requests 818 the MPD file cached at the CDN level. The HAS client 808 receives 822 the MPD file and parses the service description elements of this file. The service list is created for service #1 and transmitted 824 to the HAS application 810. The HAS client 808 performs the request with the client energy-related information in one CMCD-session header (see Code Listing 1) or in a query for some embodiments.

In step 3, a CMCD client energy-related information log event is received 820 by the analytics server 804, which stores the client energy-related information attached to the current session ID. For the case where the client is not yet connected to a service, the Session ID is an ID created by the client itself. See *A Universally Unique IDentifier (UUID) URN Namespace,* IETF RFC 4122, *available at:* tools<dot>ietf<dot>org/html/rfc4122. This ID will be used when the connection to the service is established. The client energy-related information is signaled 832 to the origin server 802 of the service provider. The origin server 802 receives 832 this information and may use the information to generate an energy bitrate ladder if the service provider decides to reduce its energy consumption or carbon impact. The analytics server 804 receives 834 the session ID client energy-related information.

In step 4, the HAS application 810 requests 826 a connection to service #1. The HAS client 808 requests 828 the initialization segment for the selected video object representation. The CDN 806 sends 830 to the HAS client 808 the initialization segment for service #1.

In step 5, the HAS client 808 requests 836 a segment for the selected video object representation. The HAS client 808 receives 838 the segment, and the HAS client 808 transmits 840 a playback event to the HAS application 810.

In step 6, the service provider decides to reduce its energy consumption or carbon impact. The client energy-related information is used to generate a version of the energy-aware bitrate ladder. The MPD is updated accordingly by the origin server 802 sending 842 an updated service description MPD for service #1 to the CDN 806. The origin server 802 sends 844 the initialization segment for service #1 to the CDN 806.

As shown in FIG. 8B, an MPD update event is received 846 by the HAS client 808. Depending on the new version of the service description of the MPD, the HAS client 808 switches from one representation to another representation, and the overall energy consumption and carbon impact is reduced. The HAS client 808 sends 848 a service #1 segment (p) request to the CDN 806. The CDN 806 sends 852 segment (p) for service #1 to the HAS client 808. The HAS client 808 sends 850 a playback event for service #1 to the HAS application 810.

In step 7, the user (through the HAS application 810) decides to be disconnected from the service, and the CMD session is released in response to the HAS application 810 sending 854 a disconnect message for service #1 to the HAS client 808.

**Client Transmits Client Energy-Related Information in Each HTTP Request**

FIGs. 9A-9B together form a message sequencing diagram illustrating example CMCD client energy-related information in each HTTP request by the client according to some embodiments. FIGs. 9A-9B work together to show the message sequencing scenario 900 in which the client transmits the client energy-related information in each HTTP request of the service session.

In step 1, the origin server 902 announces that service #1 is available by publishing 912 the MPD with the service description element for this service. The service description element indicates that the client energy-related information shall be provided by the client. The MPD and the initialization segment 916 for adaptative streaming are cached in the CDN 906 to be requested by the HAS client 908.

In step 2, the user (through the HAS application 910) requests 914 a list of video services distributed by the service provider. The HAS client 908 requests 918 the MPD file cached at the CDN level. The HAS client 908 receives 920 the MPD file and parses the service description elements of this file. The service list is created for service #1 and transmitted 922 to the HAS application 910.

In step 3, the HAS application 910 requests 924 a connection to service #1. The HAS client 908 requests 926 the initialization segment, for the selected video object representation, with the client energy-related information in one CMCD-session header (see Code Listing 1) or in a query (see Code Listing 2) for some embodiments. The CDN 906 sends 930 the initialization segment for service #1 to the HAS client 908. A CMCD session ID is created between the HAS client and server.

In step 4, the CMCD client energy-related information log event is received 928 by the analytics server 904, which stores the client energy-related information attached to the current session ID. The client energy-related information is signaled 932 to the origin server 902 of the service provider. The origin server 902 receives 932 this information and may use the information to generate an energy bitrate ladder if the service provider decides to reduce its energy consumption or carbon impact. The analytics server 904 receives 934 the session ID client energy-related information.

In step 5, the HAS client 908 requests 936 a segment with the client energy-related information in one CMCD-session header (see Code Listing 1) or in the query (see Code Listing 2) for the selected video object representation. The CDN 906 sends 938 the session ID client energy-related information to the analytics server 904. The HAS client 908 receives 940 the segment, and the HAS client 908 transmits 942 a playback event to the HAS application 910.

In step 6, the service provider decides to reduce its energy consumption or carbon impact. The client energy-related information is used to generate a version of the energy-aware bitrate ladder. The MPD is updated accordingly by the origin server 902 sending 944 an updated service description MPD for service #1 to the CDN 906. The origin server 902 sends 946 the initialization segment for service #1 to the CDN 906.

As shown in FIG. 9B, an MPD update event is received 948 by the HAS client 908. Depending on the new version of the service description of the MPD, the HAS client 908 switches from one representation to another representation, and the overall energy consumption and carbon impact is reduced. The HAS client 908 sends 950 a service #1 segment (p) request to the CDN 906. The service #1 segment (p) request includes a CMCD-session header with client energy-related information. The CDN 906 sends 956 segment (p) for service #1 to the HAS client 908. The HAS client 908 sends 952 a playback event for service #1 to the HAS application 910.

Also, the CDN 906 sends 954 the session ID client energy-related information to the analytics server 904. The analytics server 904 sends a client energy-related information event to the origin server 902. The origin server 902 sends 960 to the analytics server 904 the client energy-related information.

In step 7, the user (through the HAS application 910) decides to be disconnected from the service, and the CMD session is released in response to the HAS application 910 sending 962 a disconnect message for service #1 to the HAS client 908.

**Client Transmits Client Energy-Related Information When Performing Initialization Segment HTTP**

FIGs. 10A-10B together form a message sequencing diagram illustrating example CMCD client energy-related information in an initialization segment HTTP request by the client according to some embodiments. FIGs. 10A-10B work together to show the message sequencing scenario 1000 in which the client transmits the client energy-related information when the client performs an initialization segment HTTP request of the service session.

In step 1, the origin server 1002 announces that service#1 is available by publishing 1012 the MPD with the service description element for this service. The service description element indicates that the client energy-related information shall be provided by the client. The MPD and the initialization segment 1016 for adaptative streaming is cached in the CDN 1006 to be requested by the HAS client 1008.

In step 2, the user (through the HAS application) requests 1014 a list of video services distributed by the service provider. The HAS client 1008 requests 1018 the MPD file cached at the CDN level. The HAS client 1008 receives 1020 the MPD file and parses the service description elements of this file. The service list is created for service #1 and transmitted 1022 to the HAS application 1010.

In step 3, the HAS application 1010 requests 1024 a connection to service #1. The HAS client 1008 requests 1026 the initialization segment, for the selected video object representation, with the client energy-related information in one CMCD-session header (see Code Listing 1) or in a query (see Code Listing 2) for some embodiments. The CDN 1006 sends 1034 the initialization segment for service #1 to the HAS client 1008. A CMCD session ID is created between the HAS client and server.

In step 4, the CMCD client energy-related information log event is received 1028 by the analytics server 1004, which stores the client energy-related information attached to the current session ID. The client energy-related information is signaled 1030 to the origin server 1002 of the service provider. The origin server 1002 receives this information and may use the information to generate an energy bitrate ladder if the service provider decides to reduce its energy consumption or carbon impact. The analytics server 1004 receives 1032 the session ID client energy-related information.

In step 5, the HAS client 1008 requests 1036 a segment for the selected video object representation. The HAS client 1008 receives 1038 the segment, and the HAS client 1008 transmits 1040 a playback event to the HAS application 1010.

In step 6, the service provider decides to reduce its energy consumption or carbon impact. The client energy-related information is used to generate a version of the energy-aware bitrate ladder. The MPD is updated accordingly by the origin server 1002 sending 1042 an updated service description MPD for service #1 to the CDN 1006. The origin server 1002 sends 1044 the initialization segment for service #1 to the CDN 1006.

As shown in FIG. 10B, an MPD update event is received 1046 by the HAS client 1008. Depending on the new version of the service description of the MPD, the HAS client 1008 switches from one representation to another representation, and the overall energy consumption and carbon impact is reduced. The HAS client 1008 sends 1048 a service #1 segment (p) request to the CDN 1006. The CDN 1006 sends 1052 segment (p) for service #1 to the HAS client 1008. The HAS client 1008 sends 1050 a playback event for service #1 to the HAS application 1010.

In step 7, the user (through the HAS application 1010) decides to be disconnected from the service, and the CMD session is released in response to the HAS application 1010 sending 1054 a disconnect message for service #1 to the HAS client 1008.

**Client Transmits Client Energy-Related Information When Performing Initial and Following Initialization Segment HTTP Requests When Switching Representations**

FIGs. 11A-11B together form a message sequencing diagram illustrating example CMCD client energy-related information in HTTP requests by the client when switching representations according to some embodiments. FIGs. 11A-11B work together to show the message sequencing scenario 1100 in which the client transmits the client energy-related information when the client performs the initial initialization segment HTTP request of the service session and when the client switches from one representation to another. For some embodiments, step 6 of FIGs. 10A-10B may also happen. This scenario is not shown on FIGs. 11A-11B.

In step 1, the origin server 1102 announces that service #1 is available by publishing 1112 the MPD with the service description element for this service. The service description element indicates that the client energy-related information shall be provided by the client. The MPD and the initialization segment 1116 for adaptative streaming is cached in the CDN 1106 to be requested by the HAS client 1108.

In step 2, the user (through the HAS application) requests 1114 a list of video services distributed by the service provider. The HAS client 1108 requests 1118 the MPD file cached at the CDN level. The HAS client 1108 receives 1120 the MPD file and parses the service description elements of this file. The service list is created for service #1 and transmitted 1122 to the HAS application 1110.

In step 3, the HAS application 1110 requests 1124 a connection to service #1. The HAS client 1008 requests 1126 the initialization segment, for the selected video object representation, with the client energy-related information in one CMCD-session header (see Code Listing 1) or in a query (see Code Listing 2) for some embodiments. The CDN 1106 sends 1032 the initialization segment for service #1 to the HAS client 1108. A CMCD session ID is created between the HAS client and server.

In step 4, the CMCD client energy-related information log event is received 1128 by the analytics server 1104, which stores the client energy-related information attached to the current session ID. The client energy-related information is signaled 1130 to the origin server 1102 of the service provider. The origin server 1102 receives this information and may use the information to generate an energy bitrate ladder if the service provider decides to reduce its energy consumption or carbon impact.

In step 5, the HAS client 1108 requests 1134 a segment for the selected video object representation. The HAS client 1108 receives 1136 the segment, and the HAS client 1108 transmits 1138 a playback event to the HAS application 1110.

In step 6, the HAS client 1108 switches 1140 from one representation to another representation due to, for example, network bandwidth or quality.

As shown in FIG. 11B, the HAS client 1108 requests 1142 a new initialization segment, for the selected video object representation, with the client energy-related information in one CMCD-session header (see Code Listing 1) or in a query (see Code Listing 2). The CDN 1106 sends 1144 session client energy-related information to the analytics server 1104. The analytics server 1104 sends 1146 a client energy-related information event to the origin server 1102. The CDN 1106 sends 1148 an initialization segment for service #1 to the HAS client 1108. The HAS client 1108 sends 1150 a service #1 segment (p) request to the CDN 1106. The CDN 1106 sends 1154 segment (p) for service #1 to the HAS client 1108. The HAS client 1108 sends 1152 a playback event for service #1 to the HAS application 1110.

In step 7, the user (through the HAS application 1110) decides to be disconnected from the service, and the CMD session is released in response to the HAS application 1110 sending 1156 a disconnect message for service #1 to the HAS client 1108.

**Use Case**

Some embodiments may be applied to ecosystems involving video coding, storage and energy aware adaptative video streaming and supporting adaptive power consumption management on devices or any services providing video streaming and playback.

FIG. 12 is a flowchart illustrating an example process for reporting client energy-related information according to some embodiments. For some embodiments, an example process 1200 may include obtaining 1202 a description of services provided by a Content Delivery Network (CDN) according to a Media Presentation Description (MPD) file. For some embodiments, the example process 1200 may further include obtaining 1204 a selection of a first service selected from the description of services provided by the CDN. For some embodiments, the example process 1200 may further include connecting 1206 to a session for the first service. For some embodiments, the example process 1200 may further include obtaining 1208 a plurality of content segments corresponding to a first representation for the first service. For some embodiments, the example process 1200 may further include providing 1210, to an application for playback, one or more of the plurality of content segments corresponding to the first representation. For some embodiments, the example process 1200 may further include providing 1212, to the CDN, a report of client energy-related information. For some embodiments, the example process 1200 may further include obtaining 1214 an updated description of services provided by the CDN according to an updated MPD file, wherein the updated description of services provided by the CDN was updated based on the report of client energy-related information. For some embodiments, the example process 1200 may further include switching 1216 to a second representation for the first service.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a description of services provided by a Content Delivery Network (CDN) according to a Media Presentation Description (MPD) file; obtaining a selection of a first service selected from the description of services provided by the CDN; connecting to a session for the first service; obtaining a plurality of content segments corresponding to a first representation for the first service; providing, to an application for playback, one or more of the plurality of content segments corresponding to the first representation; providing, to the CDN, a report of client energy-related information; obtaining an updated description of services provided by the CDN according to an updated MPD file, wherein the updated description of services provided by the CDN was updated based on the report of client energy-related information; and switching to a second representation for the first service.

Some embodiments of the example method may further include: obtaining a plurality of content segments corresponding to the second representation for the first service; and providing, to an application for playback, one or more of the plurality of content segments corresponding to the second representation.

Some embodiments of the example method may further include communicating client device information to a server corresponding to a service provider.

For some embodiments of the example method, providing, to the CDN, the report of client energy-related information comprises providing the report of client energy-related information as part of an MPD service description request.

For some embodiments of the example method, providing, to the CDN, the report of client energy-related information comprises providing the report of client energy-related information as part of a content segment request.

For some embodiments of the example method, providing, to the CDN, the report of client energy-related information comprises providing the report of client energy-related information as part of an initialization segment request.

For some embodiments of the example method, switching to the second representation for the first service is based on the updated description of services provided by the CDN.

For some embodiments of the example method, switching to the second representation for the first service is based on criterion regarding energy conservation, bandwidth of a corresponding communication portal, or quality corresponding to one or more of the plurality of content segments.

For some embodiments of the example method, switching to the second representation for the first service is based on an energy-aware bitrate ladder.

For some embodiments of the example method, switching to the second representation for the first service comprises selecting the second representation from a list of representations corresponding to an energy-aware bitrate ladder.

For some embodiments of the example method, the report of client energy-related information comprises at least one of energy measurement start date, energy measurement duration, aggregate energy, aggregate power, and carbon intensity.

Some embodiments of the example method may further include: receiving, from the CDN, a query for particular client energy-related information; and providing, to the CDN, a response report of client energy-related information based on the query for particular client energy-related information.

Some embodiments of the example method may further include: receiving, from the CDN, a query for an energy index corresponding to a hardware configuration of a client device; and providing, to the CDN, the energy index corresponding to the hardware configuration of the client device.

For some embodiments of the example method, the method is performed by a device supporting at least one of a Dynamic Adaptive Streaming Over HTTP (DASH)-based protocol, an HTTP Adaptive Streaming (HAS)-based protocol, a Hypertext Transfer Protocol (HTTP)-based protocol, and a Common-Media-Client-Data (CMCD) protocol.

An example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

**1.** A method comprising:

obtaining a description of services provided by a Content Delivery Network (CDN) according to a Media Presentation Description (MPD) file;
obtaining a selection of a first service selected from the description of services provided by the CDN;
connecting to a session for the first service;

obtaining a plurality of content segments corresponding to a first representation for the first service;
providing, to an application for playback, one or more of the plurality of content segments corresponding to the first representation;
providing, to the CDN, a report of client energy-related information;
obtaining an updated description of services provided by the CDN according to an updated MPD file, wherein the updated description of services provided by the CDN was updated based on the report of client energy-related information; and
switching to a second representation for the first service.

**2.** The method of claim 1, further comprising:

obtaining a plurality of content segments corresponding to the second representation for the first service; and
providing, to an application for playback, one or more of the plurality of content segments corresponding to the second representation.

**3.** The method of any one of claims 1-2, further comprising communicating client device information to a server corresponding to a service provider.

**4.** The method of any one of claims 1-3, wherein providing, to the CDN, the report of client energy-related information comprises providing the report of client energy-related information as part of an MPD service description request.

**5.** The method of any one of claims 1-3, wherein providing, to the CDN, the report of client energy-related information comprises providing the report of client energy-related information as part of a content segment request.

**6.** The method of any one of claims 1-3, wherein providing, to the CDN, the report of client energy-related information comprises providing the report of client energy-related information as part of an initialization segment request.

**7.** The method of any one of claims 1-6, wherein switching to the second representation for the first service is based on the updated description of services provided by the CDN.

**8.** The method of any one of claims 1-6, wherein switching to the second representation for the first service is based on criterion regarding energy conservation, bandwidth of a corresponding communication portal, or quality corresponding to one or more of the plurality of content segments.

**9.** The method of any one of claims 1-6, wherein switching to the second representation for the first service is based on an energy-aware bitrate ladder.

**10.** The method of any one of claims 1-6, wherein switching to the second representation for the first service comprises selecting the second representation from a list of representations corresponding to an energy-aware bitrate ladder.

**11.** The method of any one of claims 1-10, wherein the report of client energy-related information comprises at least one of energy measurement start date, energy measurement duration, aggregate energy, aggregate power, and carbon intensity.

**12.** The method of any one of claims 1-11, further comprising:

receiving, from the CDN, a query for particular client energy-related information; and
providing, to the CDN, a response report of client energy-related information based on the query for particular client energy-related information.

**13.** The method of any one of claims 1-12, further comprising:

receiving, from the CDN, a query for an energy index corresponding to a hardware configuration of a client device; and
providing, to the CDN, the energy index corresponding to the hardware configuration of the client device.

**14.** The method of any one of claims 1-13, wherein the method is performed by a device supporting at least one of a Dynamic Adaptive Streaming Over HTTP (DASH)-based protocol, an HTTP Adaptive Streaming (HAS)-based protocol, a Hypertext Transfer Protocol (HTTP)-based protocol, and a Common-Media-Client-Data (CMCD) protocol.

**15.** An apparatus comprising:

a processor; and
a memory storing instructions operative, when executed by the processor, to cause the apparatus to perform the method of any one of claims 1 through 14.

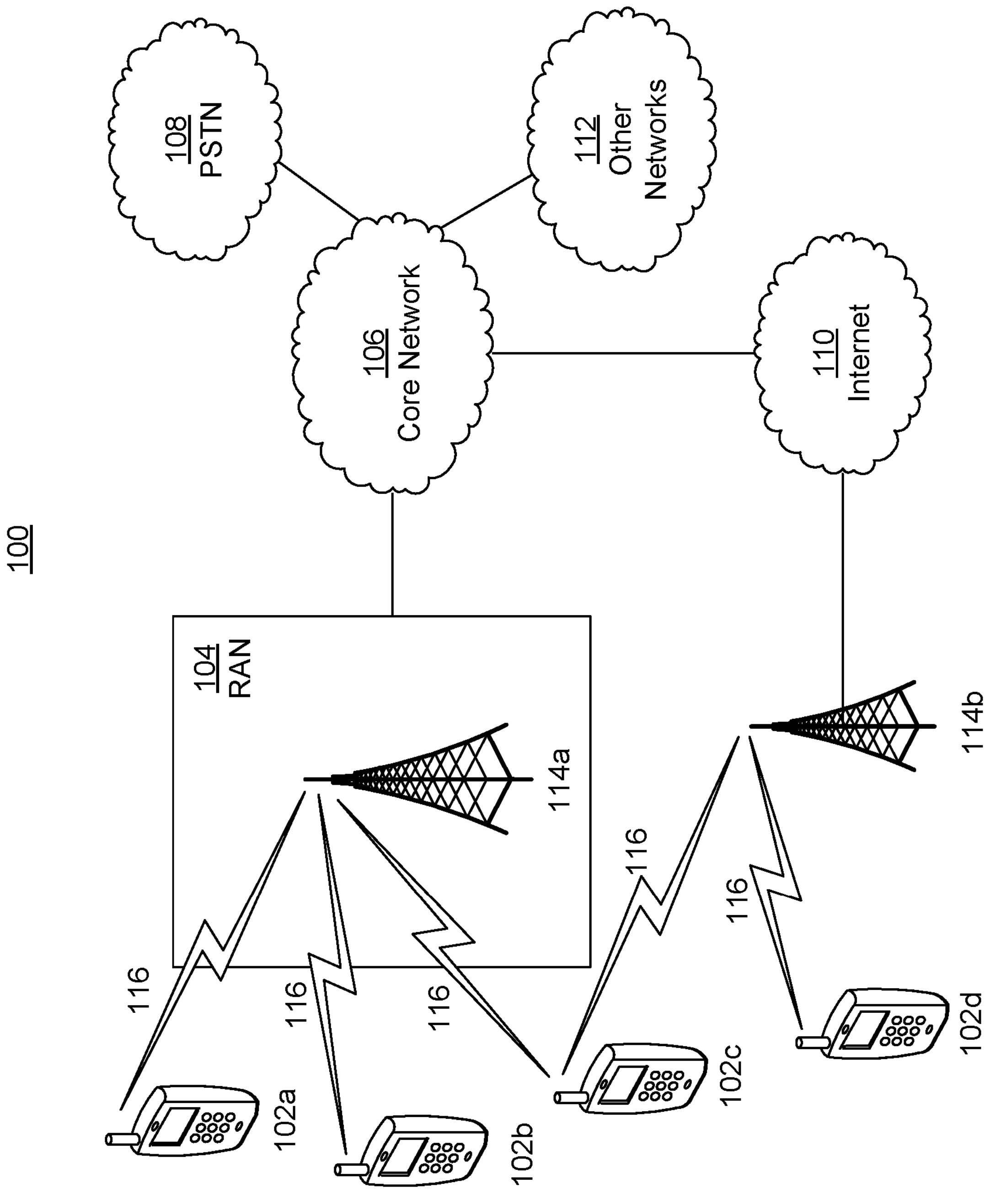
100
104
RAN
106
Core Network
108
PSTN
110
Internet
112
Other
Networks
114a
114b
116
116
116
116
116
102a
102b
102c
102d

FIG. 1A

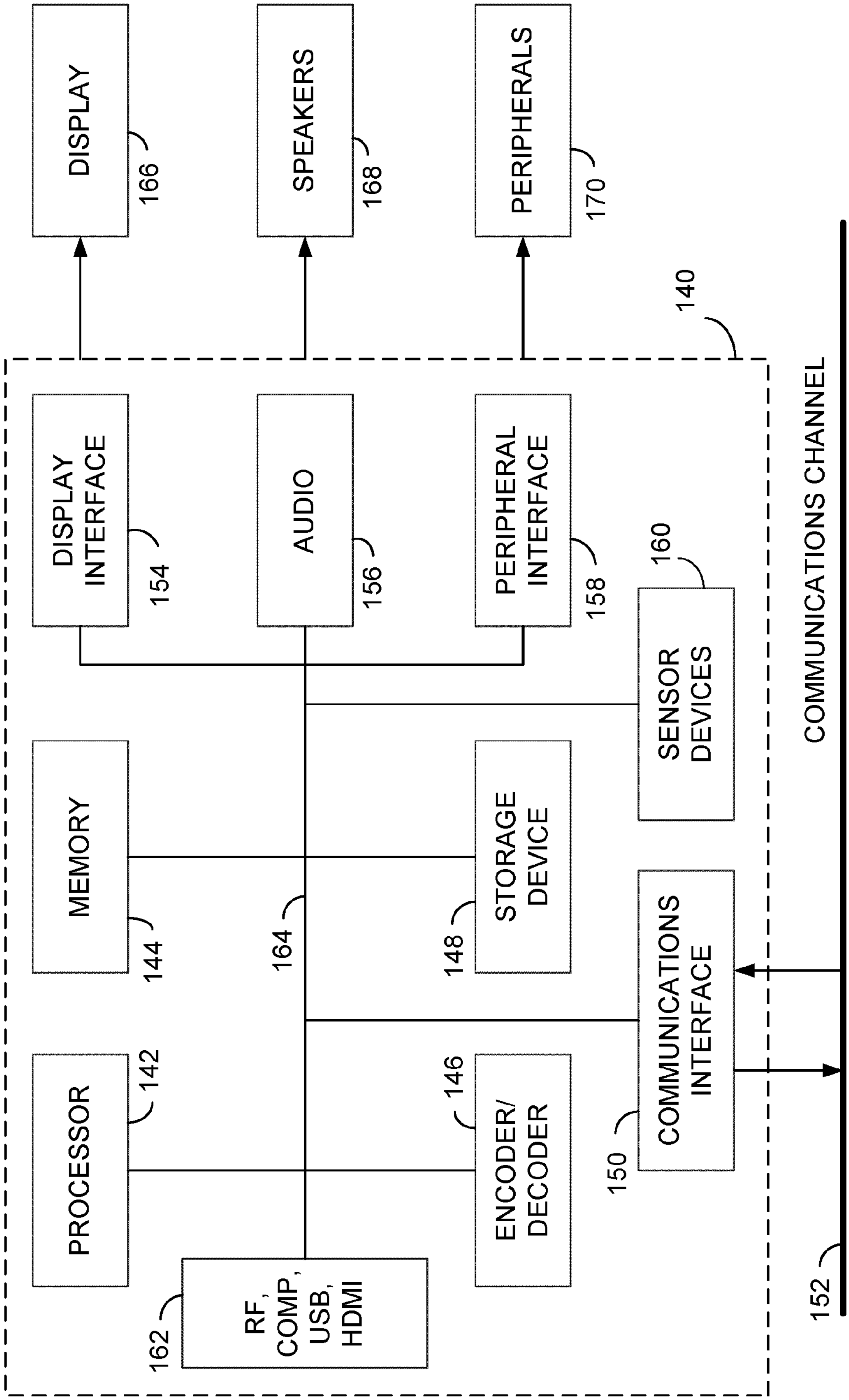
DISPLAY
166
SPEAKERS
168
PERIPHERALS
170
140
DISPLAY INTERFACE
154
AUDIO
156
PERIPHERAL INTERFACE
158
SENSOR DEVICES
160
MEMORY
144
STORAGE DEVICE
148
164
PROCESSOR
142
ENCODER/ DECODER
146
COMMUNICATIONS INTERFACE
150
RF, COMP, USB, HDMI
162
COMMUNICATIONS CHANNEL
152

FIG. 1B

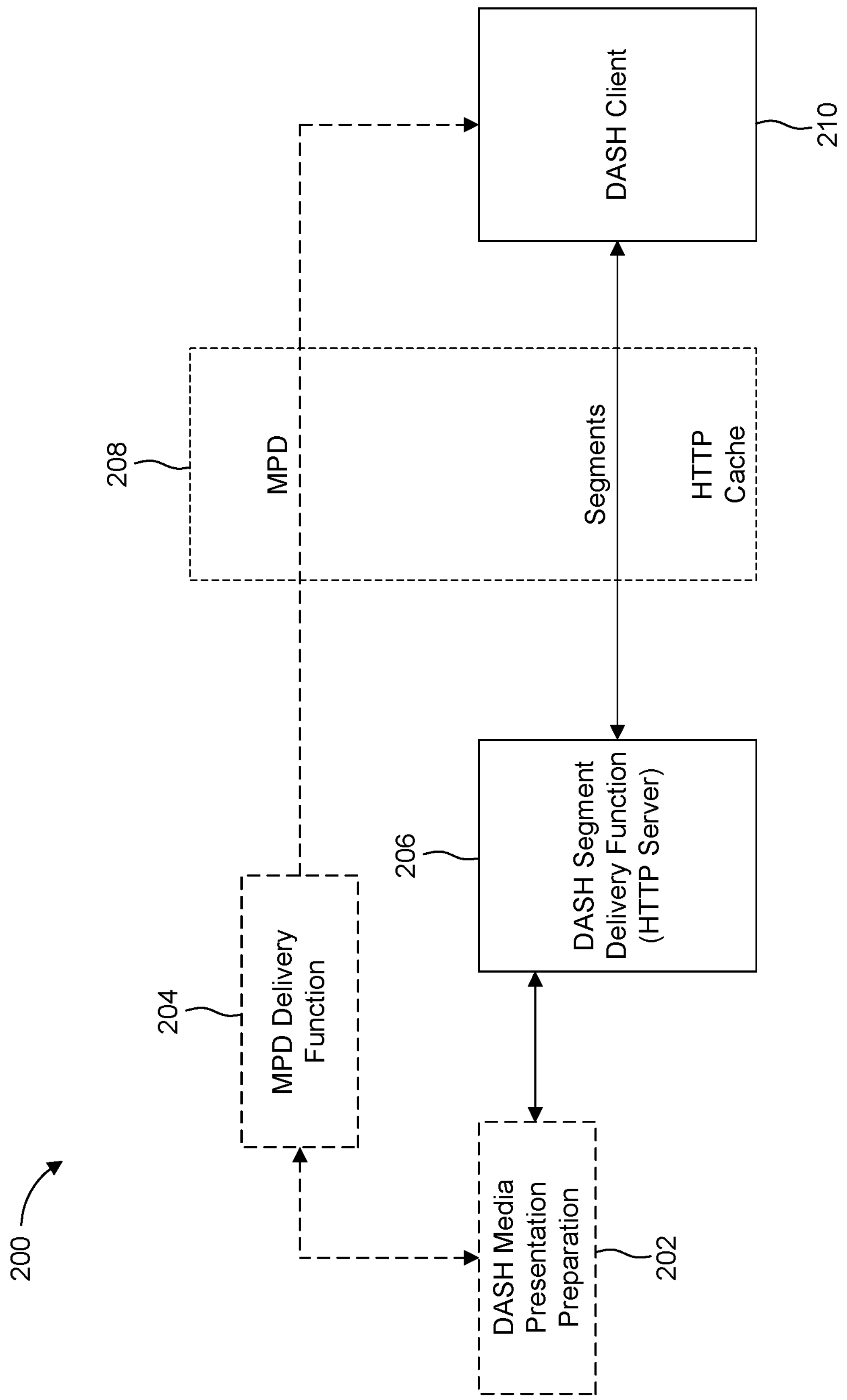
200
DASH Media Presentation Preparation
202
MPD Delivery Function
204
DASH Segment Delivery Function (HTTP Server)
206
MPD
Segments
HTTP Cache
208
DASH Client
210

FIG. 2

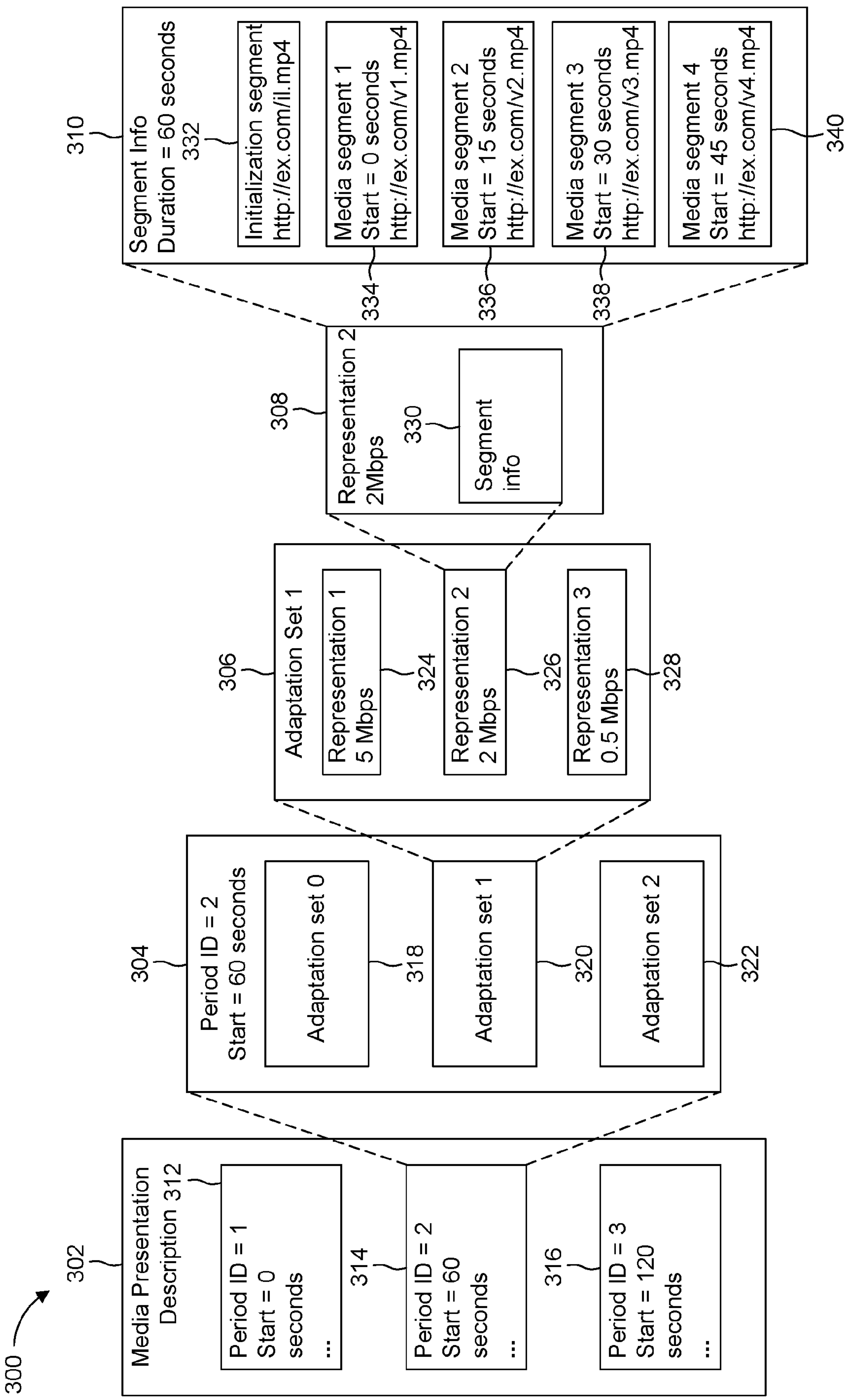
300
302
Media Presentation Description 312
Period ID = 1
Start = 0 seconds
...
314
Period ID = 2
Start = 60 seconds
...
316
Period ID = 3
Start = 120 seconds
...
304
Period ID = 2
Start = 60 seconds
Adaptation set 0
318
Adaptation set 1
320
Adaptation set 2
322
306
Adaptation Set 1
Representation 1
5 Mbps
324
Representation 2
2 Mbps
326
Representation 3
0.5 Mbps
328
308
Representation 2
2Mbps
330
Segment info
310
Segment Info
Duration = 60 seconds
332
Initialization segment
http://ex.com/il.mp4
Media segment 1
Start = 0 seconds
http://ex.com/v1.mp4
334
Media segment 2
Start = 15 seconds
http://ex.com/v2.mp4
336
Media segment 3
Start = 30 seconds
http://ex.com/v3.mp4
338
Media segment 4
Start = 45 seconds
http://ex.com/v4.mp4
340

FIG. 3

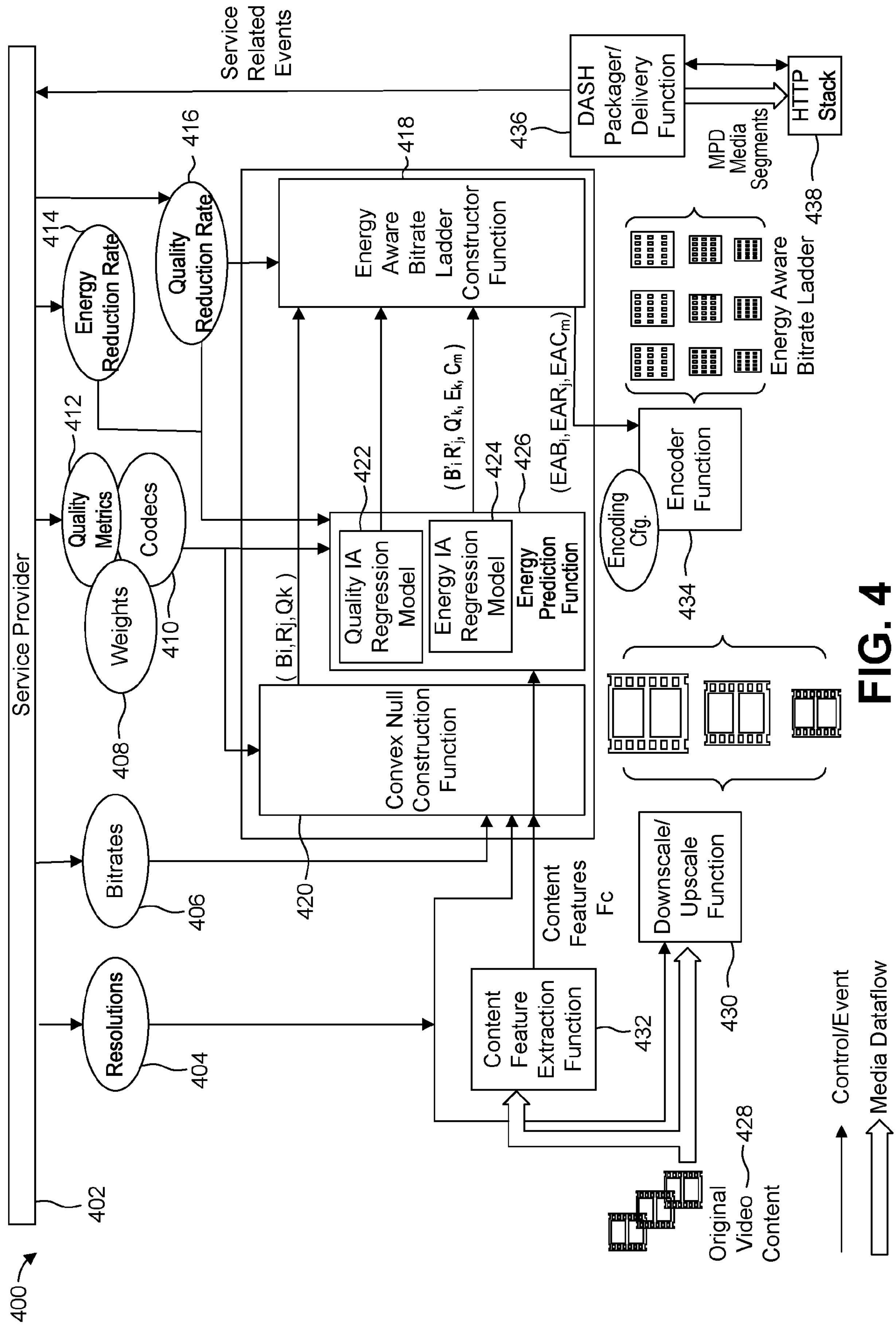
400
Service Provider
402
Resolutions
404
Bitrates
406
Weights
408
Codecs
410
Quality Metrics
412
Energy Reduction Rate
414
Quality Reduction Rate
416
418
Energy Aware Bitrate Ladder Constructor Function
Convex Null Construction Function
420
( Bi,Rj,Qk )
Quality IA Regression Model
422
Energy IA Regression Model
424
Energy Prediction Function
426
( B'i R'j, Q'k, Ek, Cm )
(EABi, EARj, EACm)
Content Features Fc
Content Feature Extraction Function
432
Downscale/ Upscale Function
430
Original Video Content
428
Encoding Cfg.
Encoder Function
434
Energy Aware Bitrate Ladder
DASH Packager/ Delivery Function
436
Service Related Events
MPD Media Segments
HTTP Stack
438
Control/Event
Media Dataflow
FIG. 4

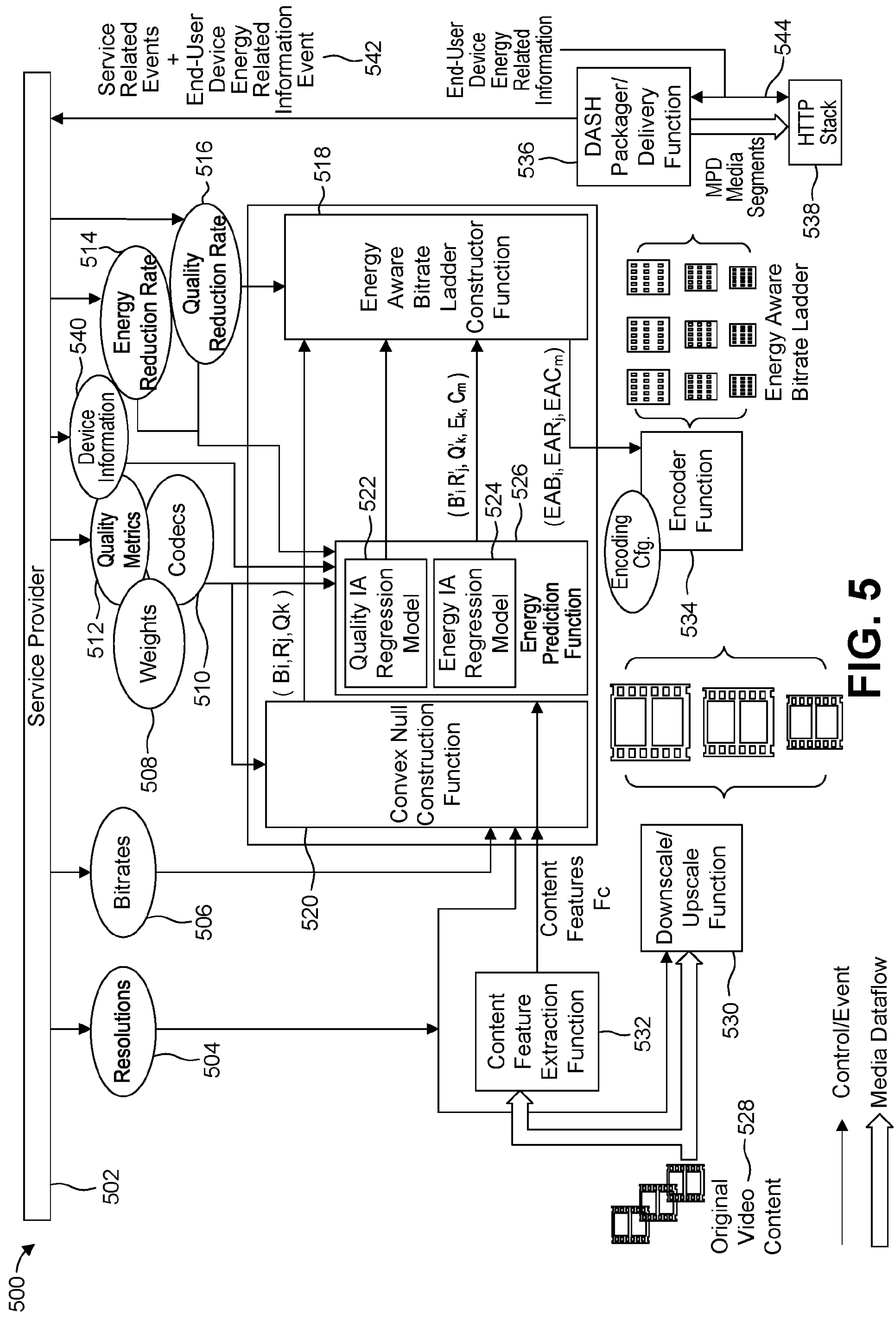
500
Service Provider
502
Resolutions
504
Bitrates
506
Weights
508
Codecs
510
Quality Metrics
512
Device Information
540
Energy Reduction Rate
514
Quality Reduction Rate
516
Service Related Events + End-User Device Energy Related Information Event
542
518
Energy Aware Bitrate Ladder Constructor Function
( Bi,Rj,Qk )
Convex Null Construction Function
520
Quality IA Regression Model
522
Energy IA Regression Model
524
Energy Prediction Function
526
( B'i R'j, Q'k, Ek, Cm )
(EABi,EARj,EACm)
Content Features Fc
Content Feature Extraction Function
532
Downscale/ Upscale Function
530
Original Video Content
528
Encoding Cfg.
Encoder Function
534
Energy Aware Bitrate Ladder
DASH Packager/ Delivery Function
536
End-User Device Energy Related Information
MPD Media Segments
HTTP Stack
538
544
Control/Event
Media Dataflow

FIG. 5

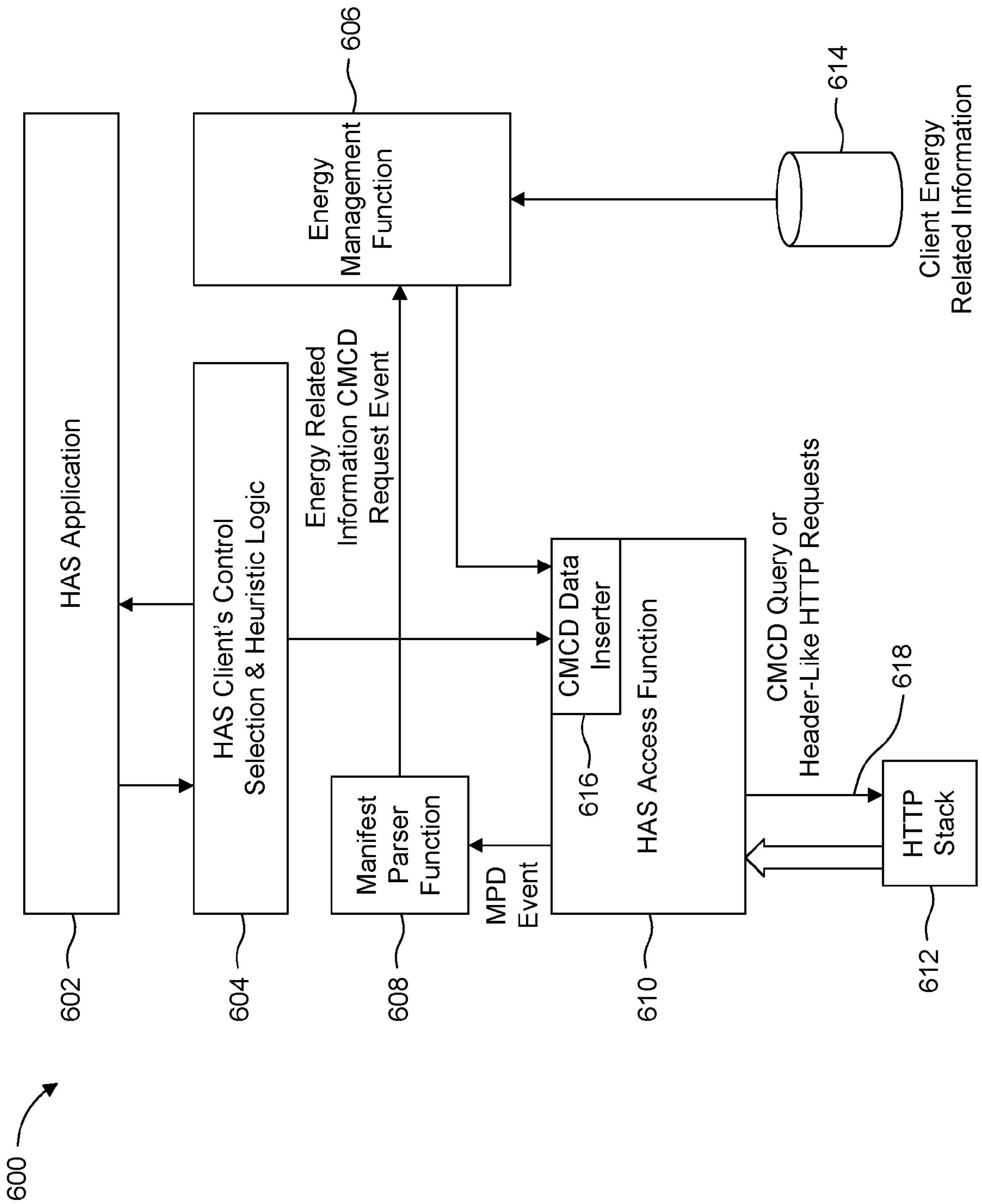
600
HAS Application
602
HAS Client's Control
Selection & Heuristic Logic
604
Energy
Management
Function
606
Energy Related
Information CMCD
Request Event
Manifest
Parser
Function
608
MPD
Event
CMCD Data
Inserter
616
HAS Access Function
610
Client Energy
Related Information
614
CMCD Query or
Header-Like HTTP Requests
618
HTTP
Stack
612

FIG. 6

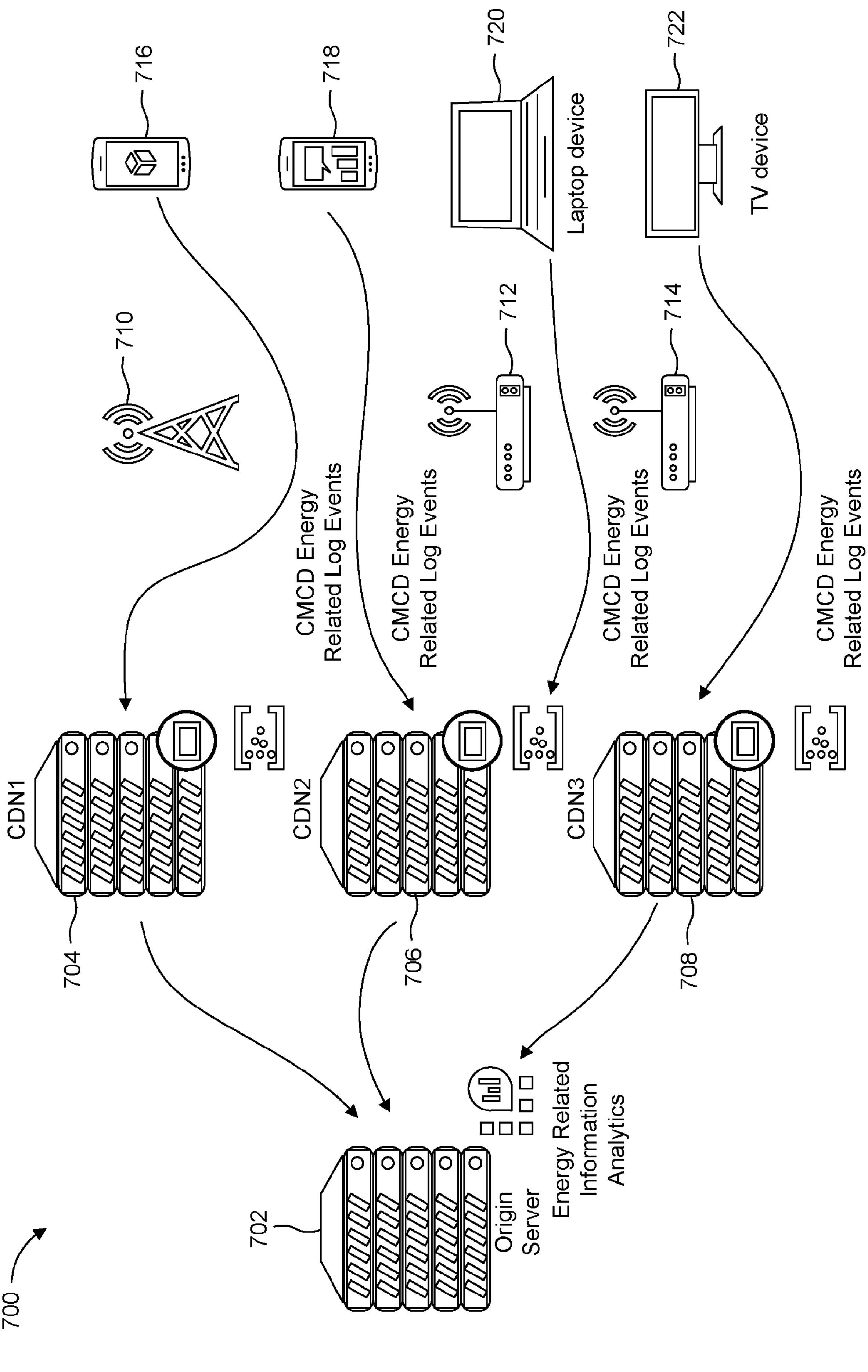
700
702
Origin Server
Energy Related Information Analytics
704
CDN1
706
CDN2
708
CDN3
710
712
714
716
718
720
Laptop device
722
TV device
CMCD Energy Related Log Events
CMCD Energy Related Log Events
CMCD Energy Related Log Events
CMCD Energy Related Log Events

FIG. 7

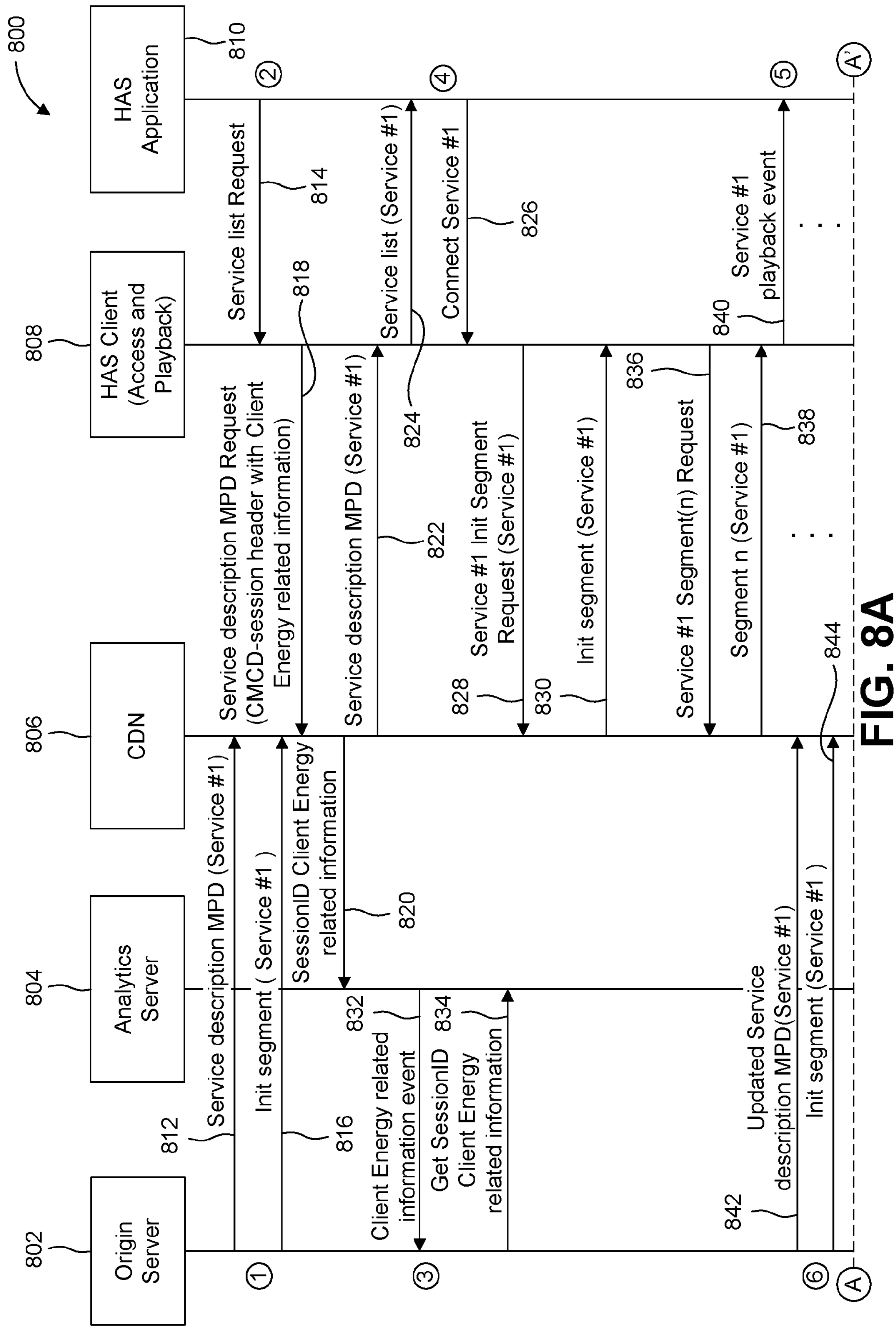
800
Origin Server
802
Analytics Server
804
CDN
806
HAS Client (Access and Playback)
808
HAS Application
810
Service description MPD (Service #1)
812
Service list Request
814
Init segment ( Service #1 )
816
Service description MPD Request (CMCD-session header with Client Energy related information)
818
SessionID Client Energy related information
820
Service description MPD (Service #1)
822
Service list (Service #1)
824
Connect Service #1
826
Service #1 Init Segment Request (Service #1)
828
Init segment (Service #1)
830
Client Energy related information event
832
Get SessionID Client Energy related information
834
Service #1 Segment(n) Request
836
Segment n (Service #1)
838
Service #1 playback event
840
Updated Service description MPD(Service #1)
842
Init segment (Service #1 )
844
1
2
3
4
5
6
A
A'

FIG. 8A

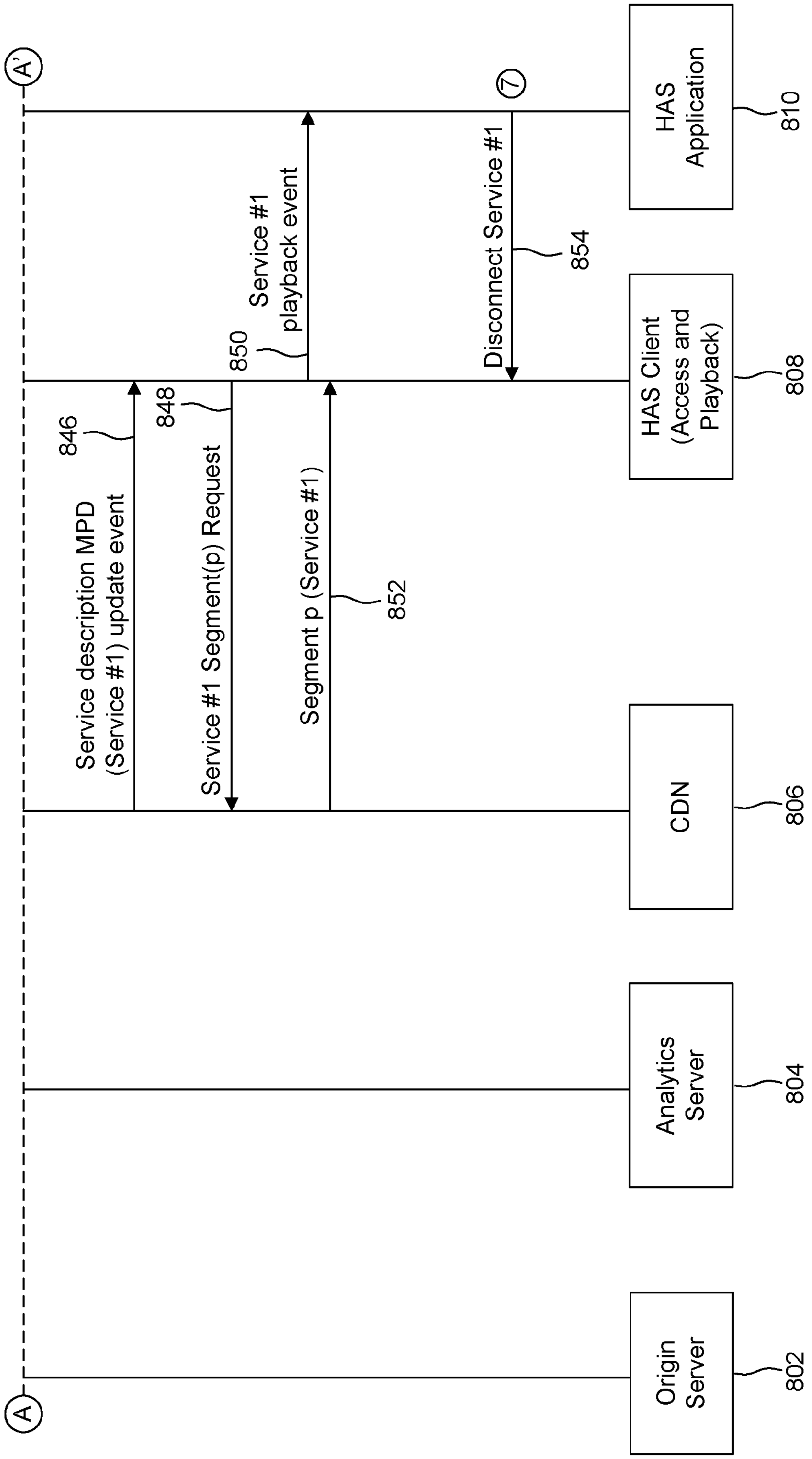
A'
A
HAS Application
810
HAS Client (Access and Playback)
808
CDN
806
Analytics Server
804
Origin Server
802
Service description MPD (Service #1) update event
846
Service #1 Segment(p) Request
848
Service #1 playback event
850
Segment p (Service #1)
852
Disconnect Service #1
854
7

FIG. 8B

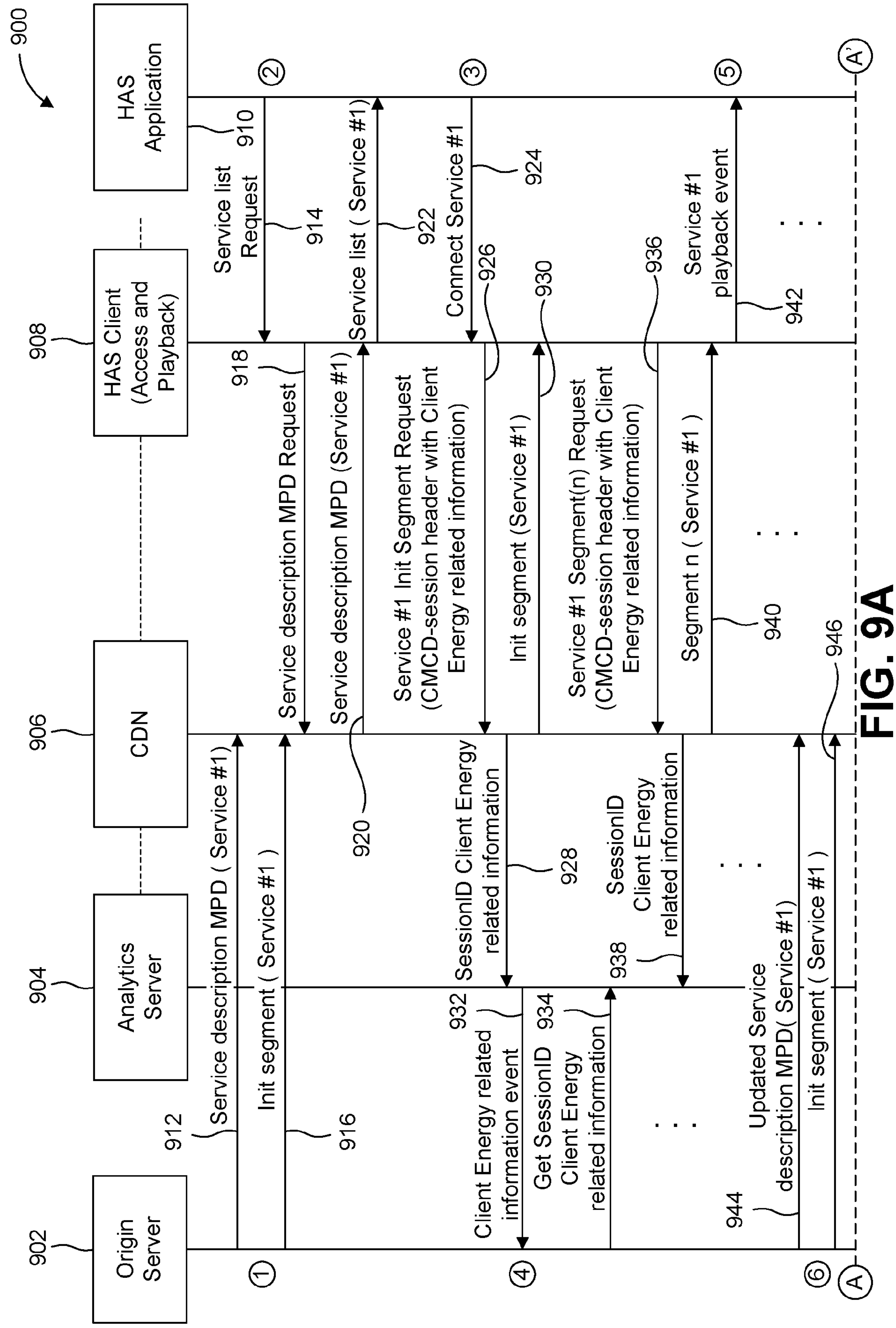
900
HAS Application
910
HAS Client (Access and Playback)
908
CDN
906
Analytics Server
904
Origin Server
902
Service list Request
914
Service list ( Service #1)
922
Connect Service #1
924
Service #1 playback event
942
Service description MPD Request
918
Service description MPD (Service #1)
920
Service #1 Init Segment Request (CMCD-session header with Client Energy related information)
926
Init segment (Service #1)
930
Service #1 Segment(n) Request (CMCD-session header with Client Energy related information)
936
Segment n ( Service #1 )
940
Service description MPD ( Service #1)
912
Init segment ( Service #1 )
916
SessionID Client Energy related information
928
SessionID Client Energy related information
938
Client Energy related information event
932
Get SessionID Client Energy related information
934
Updated Service description MPD( Service #1)
944
Init segment ( Service #1 )
946
1
2
3
4
5
6
A
A'

FIG. 9A

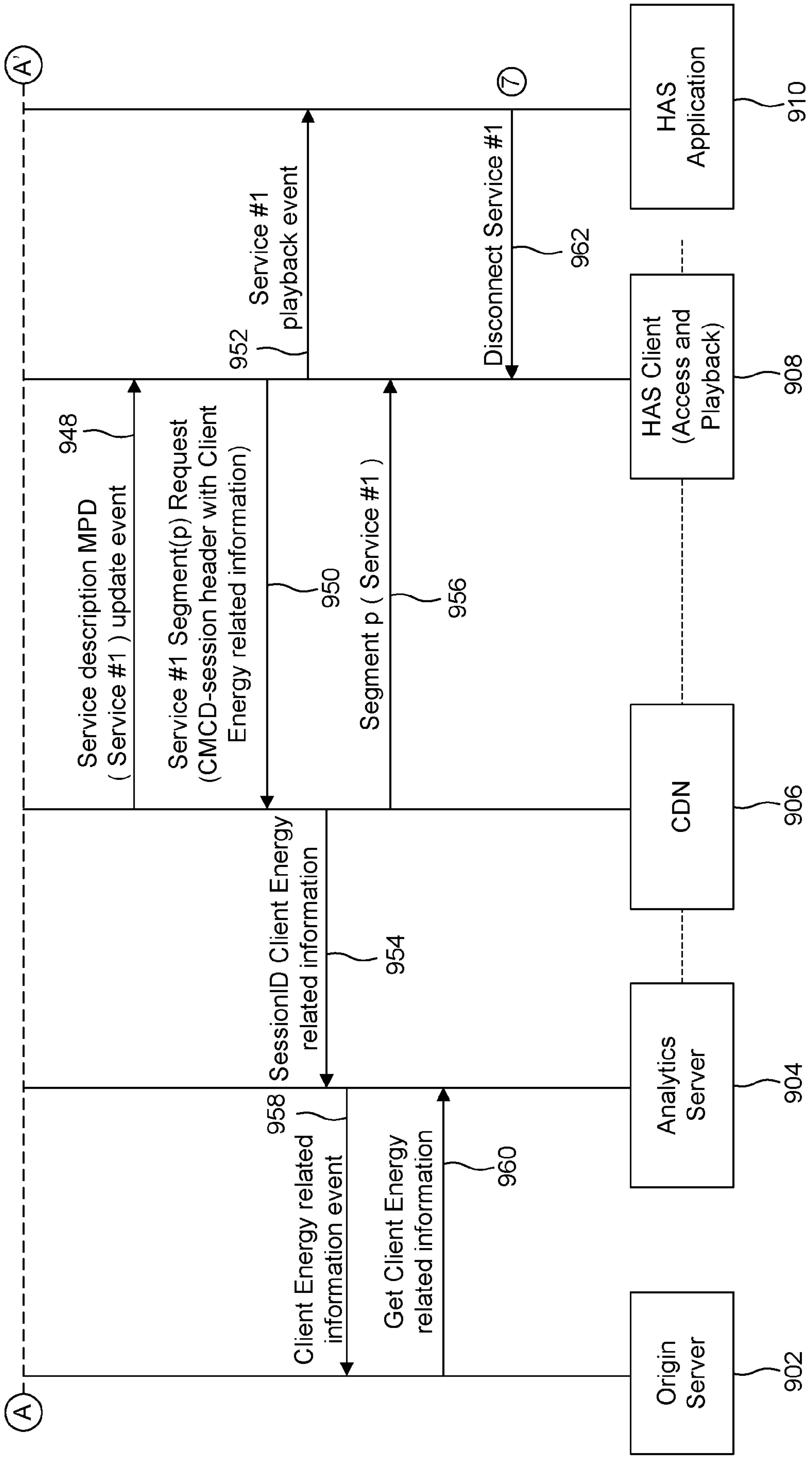
A
A'
Origin Server
902
Analytics Server
904
CDN
906
HAS Client (Access and Playback)
908
HAS Application
910
Service description MPD ( Service #1 ) update event
948
Service #1 Segment(p) Request (CMCD-session header with Client Energy related information)
950
Service #1 playback event
952
SessionID Client Energy related information
954
Segment p ( Service #1 )
956
Client Energy related information event
958
Get Client Energy related information
960
Disconnect Service #1
962
7

FIG. 9B

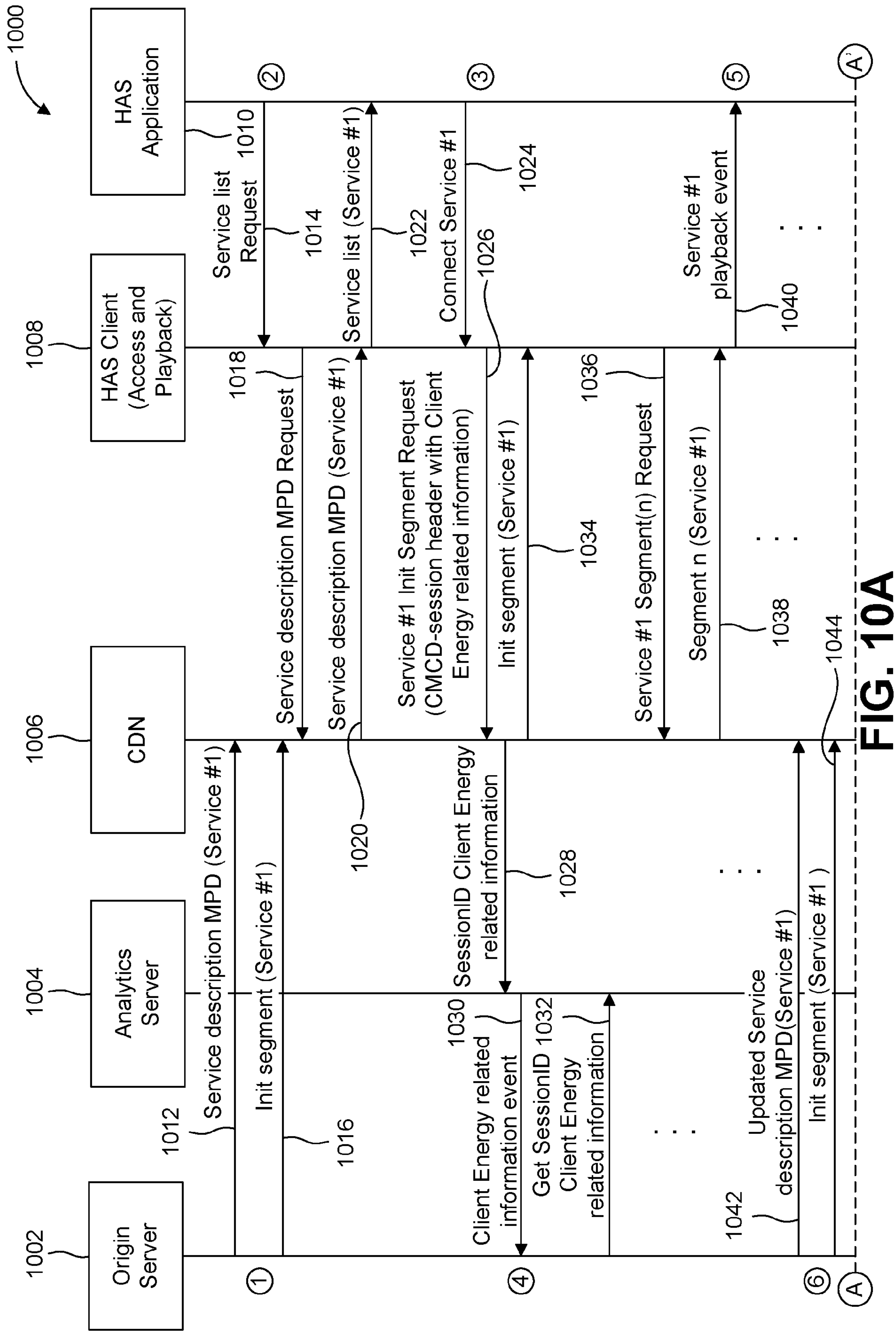
1000
Origin Server
1002
Analytics Server
1004
CDN
1006
HAS Client (Access and Playback)
1008
HAS Application
1010
Service description MPD (Service #1)
1012
Init segment (Service #1)
1016
Service list Request
1014
Service description MPD Request
1018
Service description MPD (Service #1)
1020
Service list (Service #1)
1022
Connect Service #1
1024
Service #1 Init Segment Request (CMCD-session header with Client Energy related information)
1026
SessionID Client Energy related information
1028
Client Energy related information event
1030
Get SessionID Client Energy related information
1032
Init segment (Service #1)
1034
Service #1 Segment(n) Request
1036
Segment n (Service #1)
1038
Service #1 playback event
1040
Updated Service description MPD(Service #1)
1042
Init segment (Service #1 )
1044
1
2
3
4
5
6
A
A'

FIG. 10A

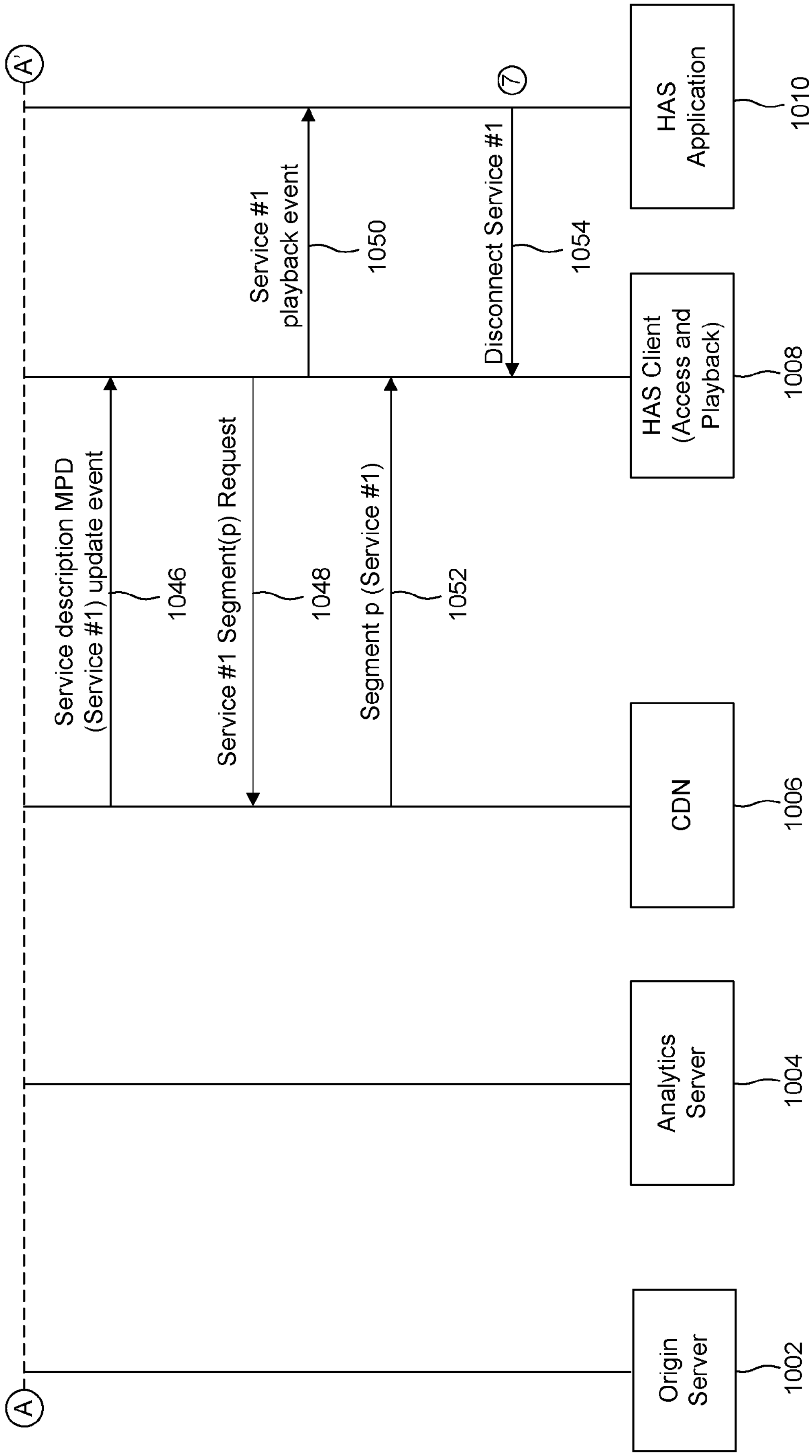
A'
A
Service description MPD (Service #1) update event
1046
Service #1 Segment(p) Request
1048
Segment p (Service #1)
1052
Service #1 playback event
1050
7
Disconnect Service #1
1054
Origin Server
1002
Analytics Server
1004
CDN
1006
HAS Client (Access and Playback)
1008
HAS Application
1010

FIG. 10B

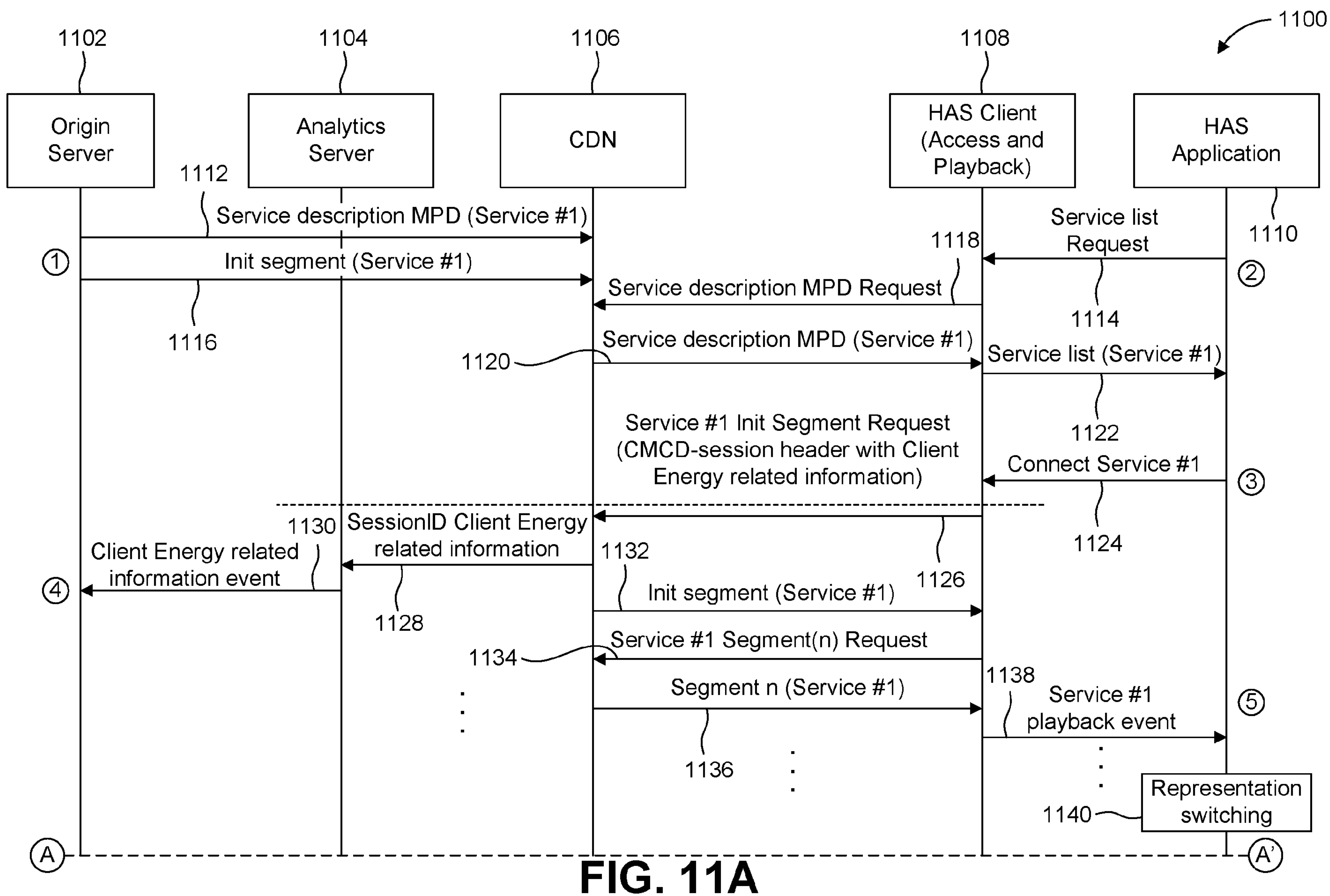
1100
1102
Origin Server
1104
Analytics Server
1106
CDN
1108
HAS Client (Access and Playback)
HAS Application
1110
1112
Service description MPD (Service #1)
1
Init segment (Service #1)
1116
Service list Request
1114
2
1118
Service description MPD Request
1120
Service description MPD (Service #1)
Service list (Service #1)
1122
Service #1 Init Segment Request (CMCD-session header with Client Energy related information)
Connect Service #1
3
1124
1126
1130
SessionID Client Energy related information
Client Energy related information event
4
1128
1132
Init segment (Service #1)
Service #1 Segment(n) Request
1134
Segment n (Service #1)
1136
1138
Service #1 playback event
5
Representation switching
1140
A
A'

FIG. 11A

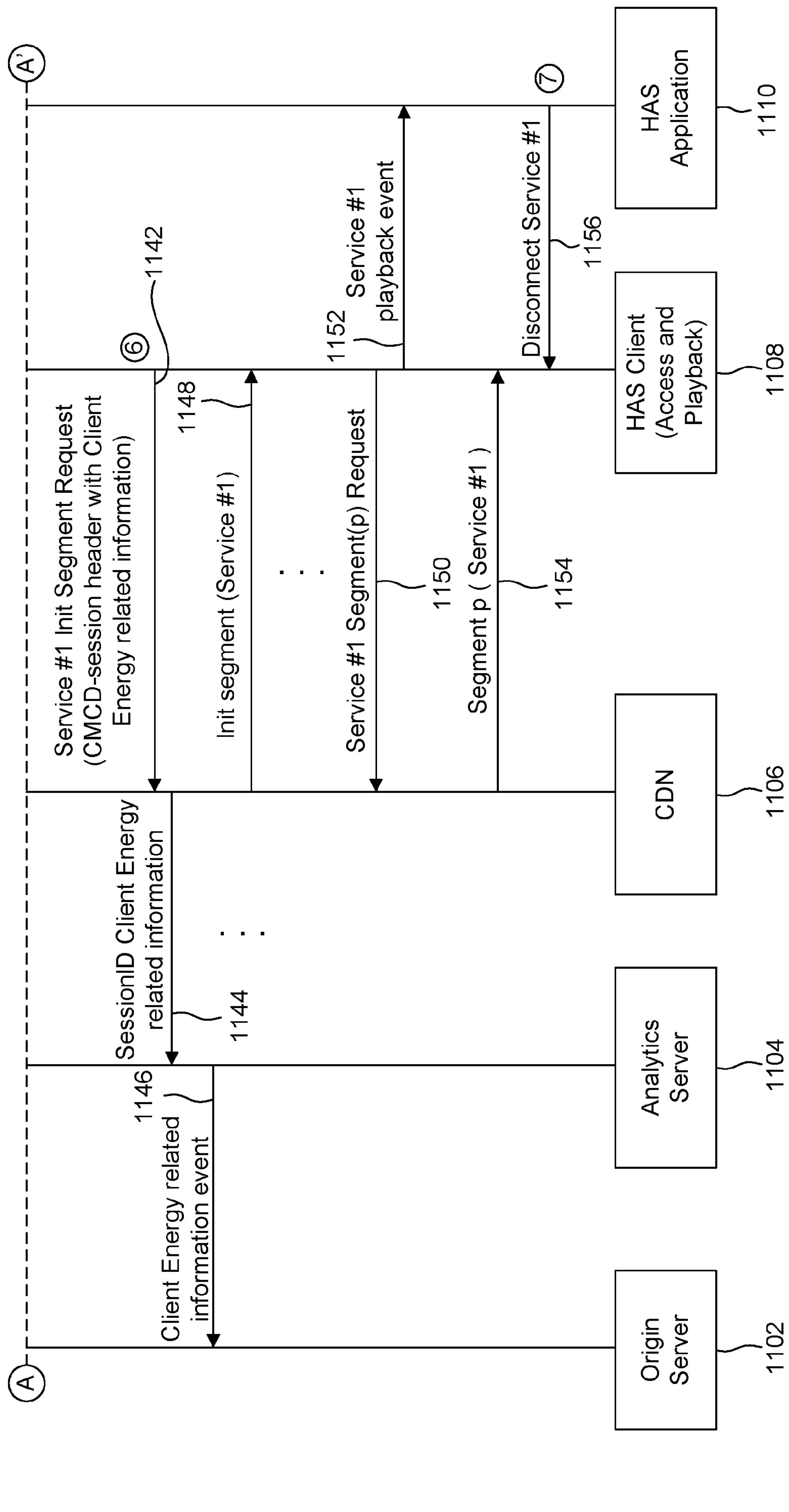
A
A'
6
7
Service #1 Init Segment Request (CMCD-session header with Client Energy related information)
1142
SessionID Client Energy related information
1144
Client Energy related information event
1146
Init segment (Service #1)
1148
Service #1 Segment(p) Request
1150
Service #1 playback event
1152
Segment p ( Service #1 )
1154
Disconnect Service #1
1156
Origin Server
1102
Analytics Server
1104
CDN
1106
HAS Client (Access and Playback)
1108
HAS Application
1110

FIG. 11B

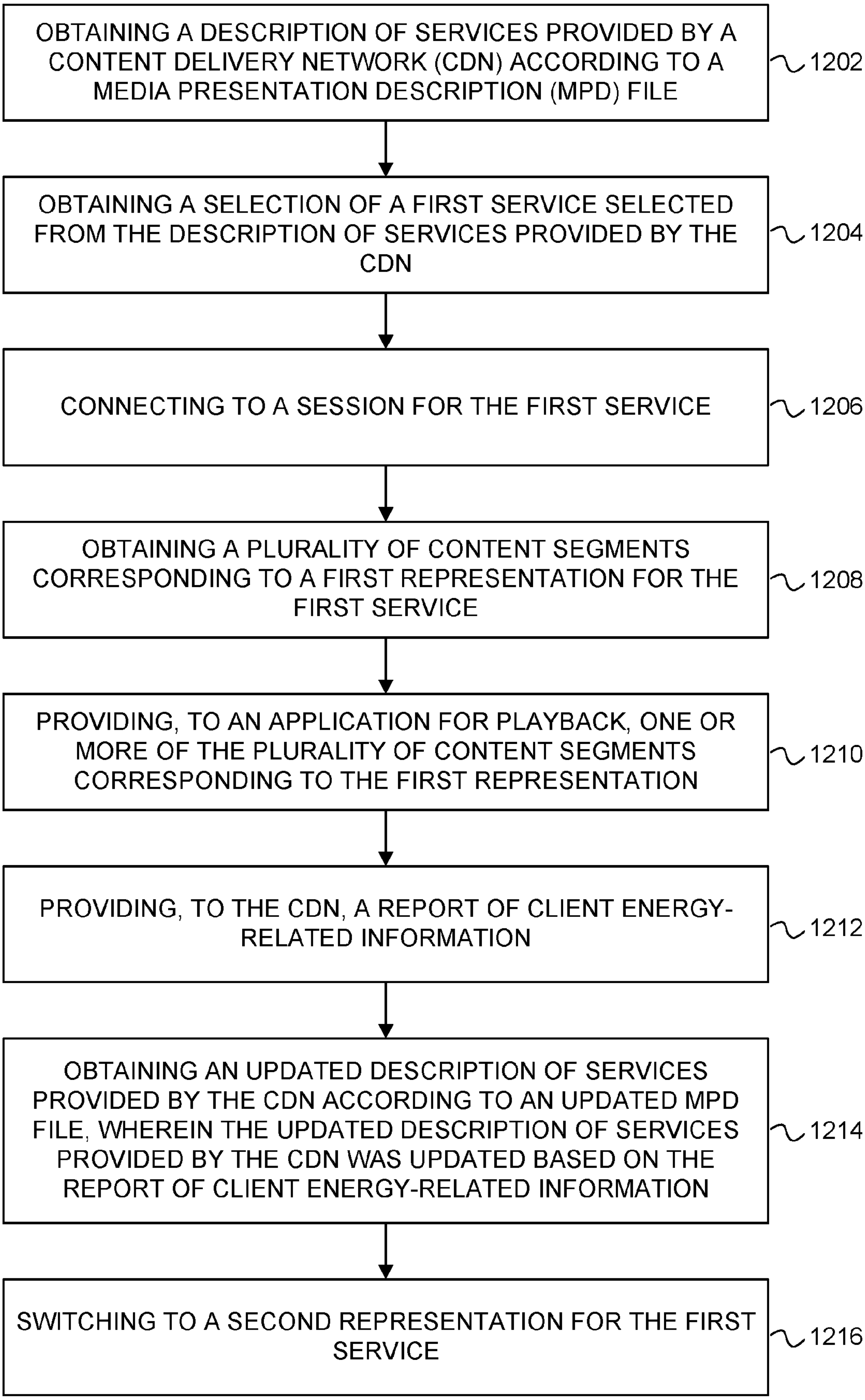
OBTAINING A DESCRIPTION OF SERVICES PROVIDED BY A CONTENT DELIVERY NETWORK (CDN) ACCORDING TO A MEDIA PRESENTATION DESCRIPTION (MPD) FILE
1202
OBTAINING A SELECTION OF A FIRST SERVICE SELECTED FROM THE DESCRIPTION OF SERVICES PROVIDED BY THE CDN
1204
CONNECTING TO A SESSION FOR THE FIRST SERVICE
1206
OBTAINING A PLURALITY OF CONTENT SEGMENTS CORRESPONDING TO A FIRST REPRESENTATION FOR THE FIRST SERVICE
1208
PROVIDING, TO AN APPLICATION FOR PLAYBACK, ONE OR MORE OF THE PLURALITY OF CONTENT SEGMENTS CORRESPONDING TO THE FIRST REPRESENTATION
1210
PROVIDING, TO THE CDN, A REPORT OF CLIENT ENERGY-RELATED INFORMATION
1212
OBTAINING AN UPDATED DESCRIPTION OF SERVICES PROVIDED BY THE CDN ACCORDING TO AN UPDATED MPD FILE, WHEREIN THE UPDATED DESCRIPTION OF SERVICES PROVIDED BY THE CDN WAS UPDATED BASED ON THE REPORT OF CLIENT ENERGY-RELATED INFORMATION
1214
SWITCHING TO A SECOND REPRESENTATION FOR THE FIRST SERVICE
1216

**FIG. 12**

1200

Europäisches Patentamt
European Patent Office
Office européen des brevets

# EUROPEAN SEARCH REPORT

Application Number
EP 24 30 6591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/095670 A1 (OZGUR OYMAN [US]) 3 April 2014 (2014-04-03) * paragraph [0034] - paragraph [0041] * * paragraph [0057] * * paragraph [0063] * * paragraph [0072] * * claims 1-17 * * figures 2, 4, 5, 10, 11 * ----- | 1-15 | INV. H04L65/613 H04L65/756 H04L65/75 H04L65/80 H04N21/2343 H04N21/262 H04N21/845 |
| A | US 2020/099943 A1 (HE YUWEN [US] ET AL) 26 March 2020 (2020-03-26) * the whole document * ----- | 1-15 | |
| | | | TECHNICAL FIELDS SEARCHED (IPC) |
| | | | H04L H04N |

The present search report has been drawn up for all claims

| Place of search | Date of completion of the search | Examiner |
|---|---|---|
| The Hague | 4 February 2025 | Walker Pina, J |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 30 6591

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| US 2014095670 A1 | 03-04-2014 | AU 2013323321 A1 | 05-02-2015 |
| | | AU 2013323978 A1 | 05-02-2015 |
| | | AU 2016203284 A1 | 09-06-2016 |
| | | AU 2017200813 A1 | 02-03-2017 |
| | | AU 2017203569 A1 | 15-06-2017 |
| | | BR 112015004006 A2 | 19-11-2019 |
| | | BR 112015004036 A2 | 01-10-2019 |
| | | BR 112015004107 A2 | 04-07-2017 |
| | | BR 112015004583 A2 | 24-07-2018 |
| | | BR 112015004586 A2 | 04-07-2017 |
| | | BR 122016013802 A2 | 27-08-2019 |
| | | BR 122016021571 A2 | 27-08-2019 |
| | | CA 2879201 A1 | 03-04-2014 |
| | | CA 2879206 A1 | 03-04-2014 |
| | | CN 104584464 A | 29-04-2015 |
| | | CN 104584475 A | 29-04-2015 |
| | | CN 104584482 A | 29-04-2015 |
| | | CN 104584620 A | 29-04-2015 |
| | | CN 104584623 A | 29-04-2015 |
| | | CN 104584672 A | 29-04-2015 |
| | | CN 104604165 A | 06-05-2015 |
| | | CN 104604167 A | 06-05-2015 |
| | | CN 104604175 A | 06-05-2015 |
| | | CN 104604263 A | 06-05-2015 |
| | | CN 104604282 A | 06-05-2015 |
| | | CN 104604284 A | 06-05-2015 |
| | | CN 104604286 A | 06-05-2015 |
| | | CN 104604299 A | 06-05-2015 |
| | | CN 104604301 A | 06-05-2015 |
| | | CN 104620640 A | 13-05-2015 |
| | | CN 104662814 A | 27-05-2015 |
| | | CN 104662997 A | 27-05-2015 |
| | | CN 104704767 A | 10-06-2015 |
| | | CN 104737485 A | 24-06-2015 |
| | | CN 104737619 A | 24-06-2015 |
| | | CN 104813693 A | 29-07-2015 |
| | | CN 104823394 A | 05-08-2015 |
| | | CN 104904303 A | 09-09-2015 |
| | | CN 105103590 A | 25-11-2015 |
| | | CN 105635949 A | 01-06-2016 |
| | | CN 106028471 A | 12-10-2016 |
| | | CN 106535338 A | 22-03-2017 |
| | | CN 108112064 A | 01-06-2018 |
| | | CN 108365941 A | 03-08-2018 |
| | | CN 108471322 A | 31-08-2018 |
| | | CN 108566267 A | 21-09-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 30 6591

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| | | CN 110311714 A | 08-10-2019 |
| | | EP 2901574 A1 | 05-08-2015 |
| | | EP 2901577 A1 | 05-08-2015 |
| | | EP 2901584 A1 | 05-08-2015 |
| | | EP 2901588 A1 | 05-08-2015 |
| | | EP 2901589 A1 | 05-08-2015 |
| | | EP 2901590 A1 | 05-08-2015 |
| | | EP 2901601 A1 | 05-08-2015 |
| | | EP 2901602 A1 | 05-08-2015 |
| | | EP 2901603 A1 | 05-08-2015 |
| | | EP 2901619 A1 | 05-08-2015 |
| | | EP 2901725 A1 | 05-08-2015 |
| | | EP 2901729 A1 | 05-08-2015 |
| | | EP 2901740 A1 | 05-08-2015 |
| | | EP 2901741 A1 | 05-08-2015 |
| | | EP 2901748 A1 | 05-08-2015 |
| | | EP 2901749 A1 | 05-08-2015 |
| | | EP 2901751 A1 | 05-08-2015 |
| | | EP 2901767 A1 | 05-08-2015 |
| | | EP 2901768 A1 | 05-08-2015 |
| | | EP 2901770 A1 | 05-08-2015 |
| | | EP 2901804 A1 | 05-08-2015 |
| | | EP 2901810 A1 | 05-08-2015 |
| | | EP 2901811 A1 | 05-08-2015 |
| | | EP 2910050 A1 | 26-08-2015 |
| | | EP 2918136 A1 | 16-09-2015 |
| | | EP 3051710 A1 | 03-08-2016 |
| | | EP 3122149 A1 | 25-01-2017 |
| | | EP 3226434 A1 | 04-10-2017 |
| | | EP 3247050 A1 | 22-11-2017 |
| | | EP 3300261 A1 | 28-03-2018 |
| | | EP 3370344 A1 | 05-09-2018 |
| | | ES 2640623 T3 | 03-11-2017 |
| | | ES 2651691 T3 | 29-01-2018 |
| | | ES 2655991 T3 | 22-02-2018 |
| | | ES 2660031 T3 | 20-03-2018 |
| | | ES 2660053 T3 | 20-03-2018 |
| | | ES 2681978 T3 | 17-09-2018 |
| | | ES 2688732 T3 | 06-11-2018 |
| | | ES 2708125 T3 | 08-04-2019 |
| | | ES 2717711 T3 | 24-06-2019 |
| | | ES 2718664 T3 | 03-07-2019 |
| | | ES 2720423 T3 | 22-07-2019 |
| | | ES 2726610 T3 | 08-10-2019 |
| | | ES 2728468 T3 | 24-10-2019 |
| | | ES 2733062 T3 | 27-11-2019 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 30 6591

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| | | ES 2735623 T3 | 19-12-2019 |
| | | ES 2743038 T3 | 18-02-2020 |
| | | ES 2745328 T3 | 28-02-2020 |
| | | ES 2748143 T3 | 13-03-2020 |
| | | ES 2763370 T3 | 28-05-2020 |
| | | HK 1207490 A1 | 29-01-2016 |
| | | HK 1209922 A1 | 08-04-2016 |
| | | HK 1210331 A1 | 15-04-2016 |
| | | HK 1210354 A1 | 15-04-2016 |
| | | HK 1211397 A1 | 20-05-2016 |
| | | HK 1217263 A1 | 30-12-2016 |
| | | HK 1219608 A1 | 07-04-2017 |
| | | HK 1252973 A1 | 06-06-2019 |
| | | HK 1253216 A1 | 14-06-2019 |
| | | HK 1254332 A1 | 19-07-2019 |
| | | HK 1255305 A1 | 16-08-2019 |
| | | HU E034753 T2 | 28-02-2018 |
| | | HU E036060 T2 | 28-06-2018 |
| | | HU E036607 T2 | 30-07-2018 |
| | | HU E038173 T2 | 28-09-2018 |
| | | HU E038544 T2 | 29-10-2018 |
| | | HU E038887 T2 | 28-12-2018 |
| | | HU E039309 T2 | 28-12-2018 |
| | | HU E042258 T2 | 28-06-2019 |
| | | HU E042952 T2 | 29-07-2019 |
| | | HU E043187 T2 | 28-08-2019 |
| | | HU E043311 T2 | 28-08-2019 |
| | | HU E043657 T2 | 28-08-2019 |
| | | HU E043710 T2 | 30-09-2019 |
| | | HU E043717 T2 | 30-09-2019 |
| | | HU E044777 T2 | 28-11-2019 |
| | | HU E044875 T2 | 28-11-2019 |
| | | HU E045674 T2 | 28-01-2020 |
| | | HU E046369 T2 | 30-03-2020 |
| | | JP 5912003 B2 | 27-04-2016 |
| | | JP 5956689 B2 | 27-07-2016 |
| | | JP 5973666 B2 | 23-08-2016 |
| | | JP 5984277 B2 | 06-09-2016 |
| | | JP 5996805 B2 | 21-09-2016 |
| | | JP 6001788 B2 | 05-10-2016 |
| | | JP 6044858 B2 | 14-12-2016 |
| | | JP 6129974 B2 | 17-05-2017 |
| | | JP 6263827 B2 | 24-01-2018 |
| | | JP 6283382 B2 | 21-02-2018 |
| | | JP 6312746 B2 | 18-04-2018 |
| | | JP 6316361 B2 | 25-04-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 30 6591

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| | | JP 6452139 B2 | 16-01-2019 |
| | | JP 2015527015 A | 10-09-2015 |
| | | JP 2015529418 A | 05-10-2015 |
| | | JP 2015530031 A | 08-10-2015 |
| | | JP 2015530044 A | 08-10-2015 |
| | | JP 2015530833 A | 15-10-2015 |
| | | JP 2015532047 A | 05-11-2015 |
| | | JP 2015532072 A | 05-11-2015 |
| | | JP 2015534394 A | 26-11-2015 |
| | | JP 2015536096 A | 17-12-2015 |
| | | JP 2016119709 A | 30-06-2016 |
| | | JP 2016197876 A | 24-11-2016 |
| | | JP 2016201825 A | 01-12-2016 |
| | | JP 2016226041 A | 28-12-2016 |
| | | JP 2016500209 A | 07-01-2016 |
| | | JP 2017050884 A | 09-03-2017 |
| | | JP 2018125880 A | 09-08-2018 |
| | | KR 20150032747 A | 27-03-2015 |
| | | KR 20150036546 A | 07-04-2015 |
| | | KR 20150036737 A | 07-04-2015 |
| | | KR 20150038336 A | 08-04-2015 |
| | | KR 20150038361 A | 08-04-2015 |
| | | KR 20150038371 A | 08-04-2015 |
| | | KR 20150038423 A | 08-04-2015 |
| | | KR 20150038532 A | 08-04-2015 |
| | | KR 20150039805 A | 13-04-2015 |
| | | KR 20150040989 A | 15-04-2015 |
| | | KR 20150040993 A | 15-04-2015 |
| | | KR 20150040995 A | 15-04-2015 |
| | | KR 20150054779 A | 20-05-2015 |
| | | KR 20150064016 A | 10-06-2015 |
| | | KR 20160066056 A | 09-06-2016 |
| | | KR 20160101205 A | 24-08-2016 |
| | | KR 20160105939 A | 07-09-2016 |
| | | KR 20160135856 A | 28-11-2016 |
| | | KR 20160142893 A | 13-12-2016 |
| | | KR 20170007551 A | 18-01-2017 |
| | | KR 20170024157 A | 06-03-2017 |
| | | KR 20170060166 A | 31-05-2017 |
| | | KR 20170078849 A | 07-07-2017 |
| | | KR 20170087964 A | 31-07-2017 |
| | | KR 20180008888 A | 24-01-2018 |
| | | MX 342952 B | 18-10-2016 |
| | | MX 343208 B | 27-10-2016 |
| | | MX 357472 B | 09-07-2018 |
| | | MY 175517 A | 01-07-2020 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 30 6591

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| | | MY 190007 A | 22-03-2022 |
| | | US 2014092731 A1 | 03-04-2014 |
| | | US 2014092742 A1 | 03-04-2014 |
| | | US 2014092786 A1 | 03-04-2014 |
| | | US 2014092787 A1 | 03-04-2014 |
| | | US 2014092799 A1 | 03-04-2014 |
| | | US 2014092808 A1 | 03-04-2014 |
| | | US 2014092821 A1 | 03-04-2014 |
| | | US 2014092824 A1 | 03-04-2014 |
| | | US 2014092828 A1 | 03-04-2014 |
| | | US 2014092833 A1 | 03-04-2014 |
| | | US 2014092865 A1 | 03-04-2014 |
| | | US 2014092878 A1 | 03-04-2014 |
| | | US 2014092886 A1 | 03-04-2014 |
| | | US 2014094119 A1 | 03-04-2014 |
| | | US 2014094162 A1 | 03-04-2014 |
| | | US 2014094185 A1 | 03-04-2014 |
| | | US 2014095668 A1 | 03-04-2014 |
| | | US 2014095670 A1 | 03-04-2014 |
| | | US 2014095730 A1 | 03-04-2014 |
| | | US 2014369244 A1 | 18-12-2014 |
| | | US 2015092641 A1 | 02-04-2015 |
| | | US 2015195822 A1 | 09-07-2015 |
| | | US 2015215801 A1 | 30-07-2015 |
| | | US 2015223050 A1 | 06-08-2015 |
| | | US 2015223284 A1 | 06-08-2015 |
| | | US 2015289240 A1 | 08-10-2015 |
| | | US 2015305083 A1 | 22-10-2015 |
| | | US 2016029262 A1 | 28-01-2016 |
| | | US 2016080134 A1 | 17-03-2016 |
| | | US 2016088509 A1 | 24-03-2016 |
| | | US 2016128127 A1 | 05-05-2016 |
| | | US 2016157178 A1 | 02-06-2016 |
| | | US 2016212638 A1 | 21-07-2016 |
| | | US 2016278060 A1 | 22-09-2016 |
| | | US 2016366722 A1 | 15-12-2016 |
| | | US 2016374097 A1 | 22-12-2016 |
| | | US 2016381730 A1 | 29-12-2016 |
| | | US 2017026868 A1 | 26-01-2017 |
| | | US 2017041827 A1 | 09-02-2017 |
| | | US 2017150484 A1 | 25-05-2017 |
| | | US 2017347286 A1 | 30-11-2017 |
| | | US 2017374577 A1 | 28-12-2017 |
| | | US 2018027442 A1 | 25-01-2018 |
| | | US 2018192318 A1 | 05-07-2018 |
| | | US 2018302820 A1 | 18-10-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 30 6591

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| | | US 2020137613 A1 | 30-04-2020 |
| | | US 2020314679 A1 | 01-10-2020 |
| | | US 2023018315 A1 | 19-01-2023 |
| | | WO 2014051951 A1 | 03-04-2014 |
| | | WO 2014052048 A1 | 03-04-2014 |
| | | WO 2014052083 A1 | 03-04-2014 |
| | | WO 2014052084 A1 | 03-04-2014 |
| | | WO 2014052088 A1 | 03-04-2014 |
| | | WO 2014052096 A1 | 03-04-2014 |
| | | WO 2014052129 A1 | 03-04-2014 |
| | | WO 2014052155 A1 | 03-04-2014 |
| | | WO 2014052156 A1 | 03-04-2014 |
| | | WO 2014052175 A1 | 03-04-2014 |
| | | WO 2014052258 A1 | 03-04-2014 |
| | | WO 2014052268 A1 | 03-04-2014 |
| | | WO 2014052303 A1 | 03-04-2014 |
| | | WO 2014052338 A1 | 03-04-2014 |
| | | WO 2014052339 A1 | 03-04-2014 |
| | | WO 2014052375 A1 | 03-04-2014 |
| | | WO 2014052381 A1 | 03-04-2014 |
| | | WO 2014052730 A1 | 03-04-2014 |
| | | WO 2014052751 A1 | 03-04-2014 |
| | | WO 2014052774 A1 | 03-04-2014 |
| | | WO 2014052850 A1 | 03-04-2014 |
| | | WO 2014052877 A1 | 03-04-2014 |
| | | WO 2014052905 A1 | 03-04-2014 |
| | | WO 2014052955 A1 | 03-04-2014 |
| | | WO 2014052956 A1 | 03-04-2014 |
| US 2020099943 A1 | 26-03-2020 | AU 2013288859 A1 | 29-01-2015 |
| | | AU 2016216674 A1 | 08-09-2016 |
| | | CN 104604241 A | 06-05-2015 |
| | | CN 108614633 A | 02-10-2018 |
| | | EP 2870770 A2 | 13-05-2015 |
| | | EP 4250745 A2 | 27-09-2023 |
| | | JP 6180524 B2 | 16-08-2017 |
| | | JP 6609598 B2 | 20-11-2019 |
| | | JP 6803443 B2 | 23-12-2020 |
| | | JP 7212025 B2 | 24-01-2023 |
| | | JP 2015532024 A | 05-11-2015 |
| | | JP 2017212744 A | 30-11-2017 |
| | | JP 2020036344 A | 05-03-2020 |
| | | JP 2021040343 A | 11-03-2021 |
| | | KR 20150029026 A | 17-03-2015 |
| | | KR 20170005147 A | 11-01-2017 |
| | | MX 345571 B | 03-02-2017 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 30 6591

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| | | TW 201414287 A | 01-04-2014 |
| | | TW 201717650 A | 16-05-2017 |
| | | US 2014010282 A1 | 09-01-2014 |
| | | US 2019158855 A1 | 23-05-2019 |
| | | US 2020099943 A1 | 26-03-2020 |
| | | US 2021274199 A1 | 02-09-2021 |
| | | US 2023086192 A1 | 23-03-2023 |
| | | WO 2014011622 A2 | 16-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2024069985 W
- EP 23306784 A
- EP 23306227 A